# EUROPÄISCHE PATENTSCHRIFT

(11) **EP 1 592 489 B1**
(45) Veröffentlichungstag und Bekanntmachung des Hinweises auf die Patenterteilung: **22.08.2007**
(21) Anmeldenummer: 04709573.2
(22) Anmeldetag: 10.02.2004
(51) Int. Cl.: B01D 29/90

(54) **FILTERVORRICHTUNG UND FILTRATIONSVERFAHREN**
FILTERING DEVICE AND FILTRATION METHOD
DISPOSITIF DE FILTRATION ET PROCEDE DE FILTRATION

(30) Priorität: 10.02.2003 DE 10305320; 10.07.2003 DE 10331457
(43) Veröffentlichungstag der Anmeldung: 09.11.2005
(73) Patentinhaber: RUDOLF GMBH, 86698 Oberndorf (DE)
(72) Erfinder: RUDOLF, Erhard, 86698 Oberndorf (DE); GLÜCK, Markus, 86720 Nördlingen (DE)
(74) Vertreter: Cremer, Ulrike Theresia
(86) Internationale Anmeldenummer: PCT/DE2004/000234
(87) Internationale Veröffentlichungsnummer: WO 2004/069372

(56) Entgegenhaltungen:
- EP-A- 0 002 422
- EP-A- 1 138 364
- DE-U- 8 808 035
- US-A- 4 569 759
- US-A1- 2001 002 006

## Beschreibung

Die vorliegende Erfindung betrifft eine Filtervorrichtung gemäß dem Oberbegriff des Anspruchs 1 und ein Filtrationsverfahren gemäß dem Oberbegriff des Anspruchs 10.

In der Fachliteratur werden mit den Oberbegriffen "Filtervorrichtungen" oder "Filteraufbauten" Hilfseinrichtungen bezeichnet, auf oder mit denen in Flüssigkeiten oder Gasen gelöste Stoffe beliebigen Aggregatzustands oder Schweb- und Trübstoffe beliebigster Form vom Lösungsmittel getrennt und entfernt werden.

Die zu filtrierende Flüssigkeit wird als "Suspension" und die den Filter durchlaufende gereinigte Flüssigkeit wird als "Filtrat" bezeichnet. Das auf dem Filter verbleibende feste Material heißt "Rückstand" und wird auch als "Filterkuchen" bezeichnet.

Als "Filtermittel" werden geeignete Hilfsvorrichtungen, Werkstücke, Beschichtungen oder Werkstoffe bezeichnet, welche zur Filtration notwendig sind. Bekannt sind verschiedenste Realisierungsformen für Filtermittel aus allen nur erdenkbaren Materialkombinationen, Kunststoffe, Keramiken oder Edelmetalle in verschiedenster Porosität und Grundstruktur.

Am häufigsten zum Einsatz kommen Kornfilter (z.B. Sand oder zerkleinerte Stäube wie z.B. Aktivkohle), Filterpapier oder Gewebefilter (wie z.B. Stoffe, Vliese, Textil- oder Drahtnetzgewebe), starre poröse Filter (z.B. aus Keramikmaterial) und halbdurchlässige bzw. durchlässige Membrane (u.a. zum Beispiel auch Tierhäute).

Ein Großteil bisheriger Realisierungsformen enthält in einem in der Regel zylinderförmig ausgeführten Behälter eine oder eine Vielzahl von Filtermitteln, die sich entweder aus einem oder mehreren röhren- bzw. als Hohlfasern ausgeführten Einzelfiltern zusammensetzen oder eine aus mehreren Filterscheiben bestehende Filterkolonne - stabförmig ausgeführt - beinhaltet.

Zur Erhöhung der Standzeiten und v.a. zur Erhöhung der Filterleistung ist bekannt, dass ein Überströmen der Filteroberflächen verbunden mit einem abrasiven Abtrag des Rückstands zu einer enormen Produktivitätserhöhung führt - allgemein unter dem Begriff Cross-Flow-Technologie (Querströmungstechnologie) bekannt gemacht. Daher wurde in bisherigen Filtervorrichtungen zur Erzeugung eines derartigen vorteilhaften Abtrags von Rückständen im Regelfall ein von außen über Gleitringdichtungen durch die Behälterwand geführtes Rührwerk mit in die Gesamtvorrichtung integriert, was neben dem vorteilhaften Abrieb des Filterkuchens zu bedeutsamen Nachteilen dieser Filtervorrichtungen führt. So müssen beispielsweise Filtermittel in aufwändigen drehbaren Vorrichtungen integriert werden, die neben einer hohen Masse des Rotors und der Filterkolonnen, einer hohen Trägheit des Aufbaus an sich, hoher Strömungswiderstände bei der Bewegung in der zu filtrierenden Flüssigkeit und auf Grund unvermeidlicher Unwuchten und Schwingungen zu bedeutsamen Limitierungen der Überströmgeschwindigkeit und enormen Defiziten bisheriger Filteraufbauten führen. Sehr nachteilig ist der in der Regel sehr hohe Energieverbrauch. Ferner sind die Hauptschwierigkeit der Konstruktion und die Hauptfehlerquelle bei Störungen im Betrieb bedingt durch den komplex und leistungsstark auszuführenden mechanischen Motorantrieb. Gleichzeitig wird die erzielbare Überströmgeschwindigkeit auf der Filteroberfläche begrenzt, die wiederum den Abtrag des sich auf der Filteroberfläche aufbauenden Filterkuchens und damit die Produktivität der Filtervorrichtung im industriellen Einsatz beeinträchtigen. Derartige Anordnungen sind beispielsweise in den Schriften DE 41 35 359 oder DE 34 01 607 vorgestellt.

Besonders nachteilig bei jeder Art von drehbaren Aufbauten zum Rühren oder Bespülen von Filterflächen ist der systemimmanent unabdingbar notwendige Einsatz von Drehdurchführungen, die kostenintensiv sind und v.a. sich durch eine ungünstige Störanfälligkeit im Filterbetrieb auszeichnen. In DE 41 35 359 wird eine derartige Ausführung beschrieben.

Aus den DE 100 38 329 und DE 43 40 218 sind Filtervorrichtungen bekannt, bei denen ortsfeste Filtermittel mit Rührwerken kombiniert sind. Die Querströmung über die Filtermittel wird bei diesen Vorrichtungen durch die Bewegung der Rührwerke erzielt.

Ferner ist aus der US 6,168,724 eine Filtervorrichtung bekannt, bei der die Filtermittel ortsfest sind. Die Strömung der Suspension wird bei dieser Vorrichtung durch das Gehäuse erzeugt, welches um die Filtermittel rotiert. Zwar kann bei dieser Art Filter die maximale Filterfläche ausgenützt werden, die problematischen Drehdurchführungen und der Energieaufwand für die Rotation bleibt jedoch bestehen.

Schließlich sind aus den US 5,500,134 und EP 0 002 422 Filtervorrichtungen bekannt, bei denen die Strömung über ortsfeste Filtermittel mittels des Einstroms der Suspension erzeugt wird. Bei der US 5,500,134 geschieht dies über ein Zweikammersystem. Der Einstrom der Suspension erfolgt zunächst in die äußere Kammer und wird dann über eine durchbrochene Zwischenwand in die innere Kammer eingeleitet. Bei der EP 0 002 422 erfolgt der Einstrom der Suspension über eine separate Suspensionszuleitung, welche im Inneren des Behälters, vorzugsweise in dessen Mitte vorgesehen ist. Nachteil ist, dass sowohl die Suspensionszuleitung als auch die -ableitung die Filtermittel durchdringen. Dadurch entstehen nicht nur bei der Herstellung hohe Kosten, infolge der Anfertigung von Filtermitteln mit entsprechend gestalteten Durchbrüchen, sondern die Zu- und Ableitungen unterbrechen die Strömung und hinter jedem Rohr, in Strömungsrichtung betrachtet, entsteht ein Bereich (sog. "Schatten), auf dem Filtermittel, das nicht überströmt ist und in dem sich folglich Partikel absetzen können. Standardscheiben sind nicht einsetzbar. Durch das mehrfache Durchbrechen der Scheiben für die Zu- und Ableitungen können Spannungen im Grundmaterial auftreten. Ferner zeigen die Scheiben ein von Standardscheiben mit einem mittigen Durchbruch abweichendes Schwingungsverhalten, so dass solche Scheiben vergleichsweise rasch zerstört werden können. Ferner ist die Montage dieser Filtervorrichtung sehr aufwändig, da die Filtermittelscheiben exakt positioniert werden müssen. Daneben ist auch in der US 2001/0002006 A1 eine Filterkonstruktion ersichtlich, insbesondere in Figur 2, die durch ihre gewählte Verspann- bzw. Tragetechnik Schattenbereiche schafft, in denen das zu filternde Medium, hier Gase, ihre Schwebteile ablagern können.

Durch den Einsatz von Tangentialflüssen in einer Filtereinheit nach EP 1 138 364 A1 werden einzelne Filterkassetten aufgebaut, deren Filtersieb einsichtig überströmt wird, wobei die Zuführungen unterschiedliche Querschnitte aufweisen. Somit sind die Zuleitungen zweier benachbarter Zuführleitungen unterschiedlich dimensioniert, was nicht zu einer vereinheitlichten Anbindung beiträgt. Auch steht zu vermuten, dass in den Bereichen der Einströmung, den spitzen Ecken, Ablagerungsstellen aufgrund der überlagerten Drehrichtungen geschaffen sind.

Angesichts der vorangehend erläuterten Problematik ergibt sich die der Erfindung zugrundeliegende Aufgabenstellung, eine verbesserte Filtervorrichtung zur Verfügung zu stellen, bei der ein lokal verstärkter Cross-Flow auf einer beliebigen Filteroberfläche und Filtergeometrie erzeugt wird. Der erzielte Cross-Flow soll insbesondere über zumindest große Bereiche des Filtermittels erzeugt werden und eine "Schattenbildung" soll vermieden werden. Insgesamt soll der Abtrag des sich auf der Filteroberfläche ansammelnden Filterrückstandes verbessert werden.

Diese Aufgabe wird durch eine Filtervorrichtung nach Anspruch 1, ein Filtermittel nach Anspruch 22 und ein Filtrationsverfahren nach Anspruch 25 gelöst. Vorteilhafte Ausgestaltungen der Erfindung sind Gegenstand der Unteransprüche.

Die erfindungsgemäße Filtervorrichtung weist einen ein- oder mehrteiligen Behälter, zumindest je eine Suspensionszuleitung und eine Suspensionsableitung, zumindest eine Filtratableitung und zumindest ein ortsfest angeordnetes Filtermittel auf. Es ist vorgesehen, dass die Suspensionszuleitung in der Behälterwand und/oder im Behälterinnenraum angeordnet ist, wobei diese Anordnung so erfolgt, dass die Suspension dem Behälter tangential zuführbar ist. Sie wird, anders ausgedrückt, parallel oder in einem Winkel zur Filtermitteloberfläche unter einem Winkel abweichend von 90° zur Behälterwand zugeführt. Die Öffnungen der Suspensionszuleitung sind tangential angeordnet, so dass die Filtermittel tangential, d.h. schräg, überströmt werden. Der Ausstoß der Suspension erfolgt somit nicht senkrecht zur Behälterwand in dem Punkt, in dem die Öffnung ansetzt, sondern in einem davon abweichenden Winkel. Anders beschrieben wird unter dem Begriff "tangential" eine Anordnung der Öffnungen und eine Einstromrichtung der Suspension verstanden, die mit Hilfe einer Tangente näher beschrieben werden kann. Betrachtet man den Kreis als Behälterwand bzw. als Wandung des Zentralrohrs, so sind Bohrungen, die an diesen Schnittpunkten dem Verlauf der Tangente folgend gesetzt werden, tangential angeordnet. Durch den schrägen Einstrom führt die Suspension eine kreisförmige Bewegung, eine rotierende Strömung, über dem Filtermittel aus. Die Suspensionszuleitung kann erfindungsgemäß in der Behälterwand angeordnet sein; die Suspension strömt dem Behälterinneren dann folglich vom

Umfang des Behälters her zu. Die Suspensionszuleitung kann jedoch auch im Inneren des Behälters angeordnet sein, sowohl zentral, als auch außermittig. Ferner kann eine erfindungsgemäße Filtervorrichtung, sowohl eine oder mehrere Suspensionszuleitungen in der Behälterwand, als auch eine oder mehrere Suspensionszuleitungen im Inneren des Behälters aufweisen. Diese Anordnung ist beispielsweise besonders bei Filteraufbauten mit sehr großem Durchmesser vorteilhaft, da durch den Einstrom der Suspension, sowohl von der Außenseite, als auch von der Innenseite her, der gesamte Filterquerschnitt und damit die gesamte Oberfläche des Filtermittels tangential überströmt wird. Eine Schattenbildung wird weitestgehend vermieden.

Die Suspension, befindet sich strömenderweise in den Lagen, Flächen oder Räumen zwischen den Filtermitteln, die vorzugsweise scheibenförmig aufgebaut sind. Die Suspension befindet sich in Bewegung, dabei hat die Bewegung eine Hauptströmungsrichtung, die mit Turbulenzen und weiteren überlagerten Strömungen versehen sein kann.

Durch die ortsfeste Anordnung des Filtermittels und da keinerlei rotierende Behälterteile oder Rührwerke zur Erzeugung einer Strömung notwendig sind, entfallen bei der erfindungsgemäßen Filtervorrichtung sämtliche sich im täglichen Betrieb als nachteilig herausgestellten Drehdurchführungen. Ferner ist dadurch die Energiebilanz stark verbessert. Weiterhin ist die Strömung der Suspension im Behälterinnenraum nicht behindert. Dadurch entfallen nicht nur die sog. Schattenbereiche, in denen sich Partikel ansammeln können, sondern die Strömung kann sich ungehindert über das Filtermittel verteilen und ausbreiten und zur angestrebten Abrasion des Filterkuchens beitragen. Auf Grund des überwiegenden Fehlens von Ecken und Kanten ergibt sich überdies eine verbesserte Sterilisationsmöglichlceit der Filtervorrichtung, so dass beispielsweise auch Dampfsterilisationsverfahren eingesetzt werden können. Bevorzugt können in der Filtervorrichtung Standardfiltermittelscheiben eingesetzt werden, insbesondere Keramikhohlfilterscheiben. Bevorzugt ist ein Zentralrohr vorgesehen, in dem die Filtratableitung und/oder die Suspensionszuleitung und/oder die Suspensionsableitung vorgesehen sind. Die Komponenten, die nicht in dem Zentralrohr angeordnet sind, werden in der Behälterwand ausgebildet. Dadurch ergibt sich vorteilhaft, dass keinerlei weitere Durchbrüche, außer der üblichen Öffnung in der Mitte einer Filterscheibe, in dem Filtermittel ausgebildet werden müssen.

Das Filtermittel gemäß der Erfindung besteht aus einem innen liegenden Grundkörper, über den die Ableitung eines Filtrates hin zu einer Filtratableitung erfolgt, und aus einem darüber angebrachten Sieb oder einer Membran, durch die der Filtrationsvorgang erfolgt. Die Oberfläche des Filtermittels ist zumindest teilweise profiliert ist und/oder dass der Rand (62) des Filtermittels zumindest teilweise profiliert, wobei der Rand insbesondere wellenförmig profiliert ist.

Das erfindungsgemäße Filtrationsverfahren wird in einem Behälter durchgeführt, welcher zumindest je eine Suspensionszuleitung und eine Suspensionsableitung, zumindest eine Filtratableitung und zumindest ein ortsfest angeordnetes Filtermittel aufweist. Neuerungsgemäß ist vorgesehen, dass die Suspension über die in der Behälterwand angeordnete Suspensionszuleitung tangential unter Druck eingeströmt wird. Durch das erfindungsgemäße Filtrationsverfahren werden Ablagerungen auf den Filtermitteln zuverlässig beseitigt, ohne dass es eines hohen Energieaufwandes bedürfte.

Die erfindungsgemäße Filtervorrichtung ist bevorzugt in Modulbauweise errichtet. Sie besteht aus einzelnen Filtermodulen, wobei jedes Filtermodul zumindest eine Suspensionszuleitung, eine Suspensionsableitung, ein Filtermittel und eine Filtratableitung aufweist. Der Vorteil des Modulaufbaus ist, dass eine beliebige Anzahl an Filtermodulen zu der erfindungsgemäßen Filtervorrichtung zusammengesetzt werden können. Hierdurch lassen sich Filter unterschiedlichster Leistungsklassen zusammensetzen.

Die erfindungsgemäße Filtervorrichtung und das Filtrationsverfahren weisen daneben noch eine Anzahl an Charakteristika auf, die insbesondere im Produktionseinsatz und in der Lebensmittelbranche erwünscht sind, und von denen eine Auswahl nachfolgend kurz genannt ist:
- Hohe Flexibilität und niedrige Rüstzeiten, unter anderem, da ein Einsatz verschiedenster Filtermittel, Filtermaterialien und Realisierungsformen möglich ist;
- Geringer Aufwand zur Regeneration oder Reinigung und damit mehrmaligen Verwendung der Filtermittel, z.B. indem ein rasches, automatisiertes Rückspülen des Rückstands von der Filteroberfläche möglich ist. Auch Sterilisierungsprozesse in heißem Dampf oder Wasser sind möglich, ein verringerter Einsatz von chemischen Lösungen in beliebigen Säure- und Lauge-unterstützten Reinigungsschritten erforderlich sind;
- Geringe Stör- und Wartungsanfälligkeit und ein wartungsfreundlicher Aufbau zum Erzielen von kurzen Rüstzeiten und möglichst langen Wartungsintervallen.

Zur praktischen Umsetzung der Erfindung sind mehrere Realisierungsformen denkbar, die sich allesamt durch eine stationäre Realisierung der in Cross-Flow-Technologie betriebenen Filterhilfsmittel auszeichnen. Im Folgenden wird die Erfindung an Hand von Ausführungsbeispielen unter Bezugnahme auf die schematischen Zeichnungen der folgenden Figuren näher erläutert.

Es zeigen:
- Fig. 1:: eine teilweise geschnittene, perspektivische Darstellung einer erfindungsgemäßen Filtervorrichtung;
- Fig. 2:: einen Längsschnitt durch ein weiteres Ausführungsbeispiel einer Filtervorrichtung;
- Fig. 3:: eine perspektivische Ansicht der Filtervorrichtung von Fig. 2;
- Fig. 4:: eine Draufsicht auf die Filtervorrichtung der Fig. 2 und 3;
- Fig. 5:: eine teilweise geschnittene, perspektivische Darstellung eines weiteren Ausführungsbeispiels einer erfindungsgemäßen Filtervorrichtung;
- Fig. 6:: einen Querschnitt durch noch ein Ausführungsbeispiel der Erfindung;
- Fig. 7:: ein erfindungsgemäßes Filtermittel in Draufsicht;
- Fig. 8:: einen Querschnitt durch noch ein weiteres Ausführungsbeispiel einer Filtervorrichtung;
- Fig. 9:: einen Längsschnitt durch noch ein weiteres Ausführungsbeispiel einer Filtervorrichtung;
- Fig. 10:: einen Längsschnitt durch noch ein weiteres Ausführungsbeispiel einer Filtervorrichtung;
- Fig. 11:: eine Draufsicht auf die Filtervorrichtung der Fig. 10.
- Fig. 12:: eine teilweise geschnittene, perspektivische Darstellung eines weiteren Ausführungsbeispiels einer erfindungsgemäßen Filtervorrichtung;
- Fig. 13:: eine funktionelle Darstellung noch eines weiteren Ausführungsbeispiels der Erfindung; und
- Fig. 14:: einen Schnitt entlang der Linie A-A in Fig. 13.

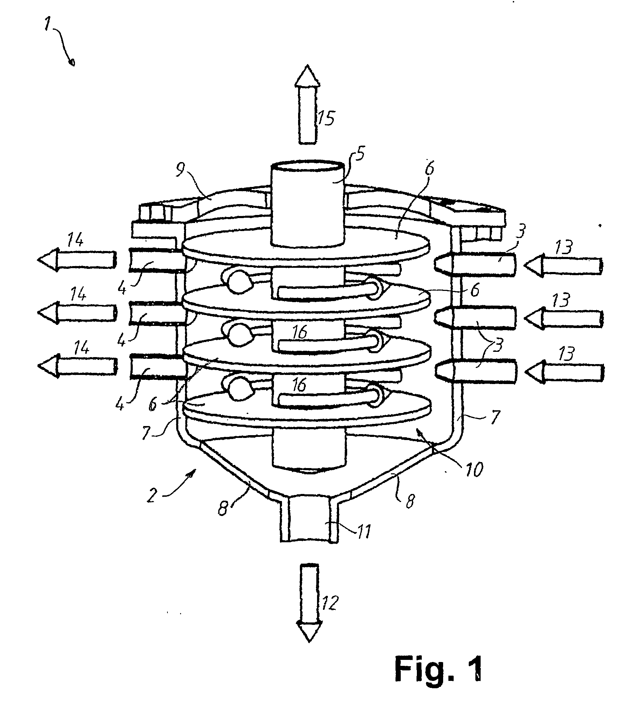

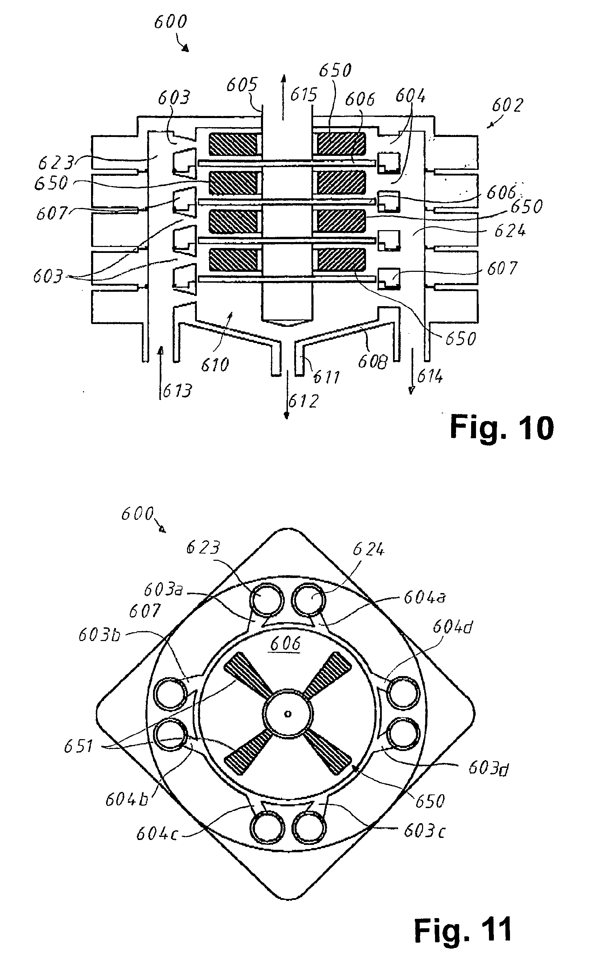

Wie aus Fig. 1 ersichtlich, weist die erfindungsgemäße Filtervorrichtung 1 einen Behälter 2 auf, in dessen Behälterwand 7 mehrere Suspensionszuleitungen 3 und Suspensionsableitungen 4 angeordnet sind. Aus der Darstellung wird deutlich, dass der Querschnitt der Suspensionszuleitungen 3 sich zum Behälterinnenraum 10 hin verjüngt, wohingegen der Querschnitt der Suspensionsableitungen 4 gleichbleibend bzw. erweitert ist. Im Behälterinnenraum 10 ist eine Anzahl an scheibenförmigen Filtermitteln 6 angeordnet. Die Anordnung der Filtermittel erfolgt über einer Längsachse des Behälters 2, die im Ausführungsbeispiel der Fig. 1 mit der Filtratableitung 5 zusammenfällt. Die Zuleitung der Suspension ist durch die Pfeile 13, deren Ableitung durch die Pfeile 14 und die Ableitung des Filtrats durch den Pfeil 15 dargestellt. Der Behälter weist überdies einen Behälterdeckel 9, der den Behälter 2 nach oben hin begrenzt, und einen Behälterboden 8 auf, der ihn nach unten hin begrenzt. Der Behälterboden 8 ist im Ausführungsbeispiel der Fig. 1 trichterförmig gestaltet und mit einem Partikelablass 11 versehen. Der Einstrom der Suspension über die Suspensionszuleitungen 3 erfolgt tangential. Anders ausgedrückt erfolgt der Einstrom nicht senkrecht zur Behälterwand 7, sondern in einem davon abweichenden Winkel, sozusagen schräg. Dadurch wird die Suspension über jedem Filtermittel 6 beschleunigt und vollzieht auf diesen jeweils eine kreisförmige Bewegung, angedeutet durch die Pfeile 16. Es wird deutlich, dass jedem Filtermittel 6 zumindest eine Suspensionszuleitung 3 zugeordnet ist, über dessen Oberfläche die Suspension bewegt wird. Durch die Strömung der Suspension über das Filtermittel 6 wird dessen Oberfläche von Partikeln freigehalten. Ferner ergibt sich eine Zentrifugalwirkung durch welche insbesondere größere Partikel zum Randbereich des Filtermittels 6 hin getragen werden, an der Behälterwand 7 zum Behälterboden 8 absinken und dort über den Partikelablass 11 entnommen werden können, angedeutet durch den Pfeil 12 (Zyklonwirkung). Es erfolgt folglich auf Grund der Rotationsbewegungen der zu filternden Suspension über der Filtermitteloberfläche und damit wirkender Zentrifugalkräfte eine Schwimmtrennung, welche wiederum zu einem Abtransport losgeschlagener bzw. in Lösung befindlicher Filterrückstände und Schwebstoffe führt. Diese gelangen gezielt in einen Raumbereich, wo sie entweder aufkonzentriert oder lokal abgesaugt werden können und nicht unmittelbar zur Verstopfung der Filteroberflächen führen, beispielsweise wenn diese den Randbereichen oder einem Rückhaltebereich im Behälter, im Ausführungsbeispiel dem Behälterboden 8, zuströmen können, was zu einer signifikanten Standzeiterhöhung beiträgt. Der Einsatz aus einer oder mehreren Düsen bestehender Einlassvorrichtungen, die Suspensionszuleitungen 3, führt auf Grund des erheblich verringerten Querschnitts von typischerweise wenigen Millimetern zu erhöhten Strömungsgeschwindigkeiten und - unter Einbeziehung spezieller Formgebung (z.B. Drall) - zu einem wesentlich verbesserten Abtrag von Filterrückständen an der Filteroberfläche mittels Abrasion. Die Überströmgeschwindigkeiten erreichen dadurch, insbesondere durch den Einsatz von Venturi-Düsen, ein Vielfaches der ansonsten durch Rührwerke erzielbaren Werte. Die Suspensionszuleitungen 3 können aus einer bzw. mehreren Einzeldüsen bestehen oder können Konfigurationen annehmen, die aus mehreren Düsen bestehen (z.B. schwenkbare oder quasi-stationäre Kammstrukturen). Sie sind punktförmig an verschiedenen Positionen im Behälter 2 angeordnet und sind ggf. mit verschiedenen Drücken, Durchmessern und Anströmgeschwindigkeiten beaufschlagbar, um Strömungsform und Überströmgeschwindigkeiten an der Filtermitteloberfläche gezielt zu beeinflussen und zu erhöhen. Die Filterung der Suspension erfolgt über die Filtermittel 6 hin zur Filtratableitung 5. Es sei darauf hingewiesen, dass die Filtratableitung 5 auch über den Behälterboden 8 oder die Behälterwand 7 erfolgen kann, nicht nur wie dargestellt über den Behälterdeckel 9. Im Ausführungsbeispiel der Fig. 1 sind der besseren Darstellbarkeit halber lediglich einige wenige Filtermittel 6 und die dazugehörigen Suspensionszuleitungen 3 und -ableitungen 4 dargestellt. Es können jedoch, lediglich von der gewünschten Filterleistung und den räumlichen Gegebenheiten abhängig, eine annähernd beliebige Anzahl an Filtermitteln 6 übereinander angeordnet und die Suspensionszu- und -ableitungen 3, 4 entsprechend zugeordnet werden. Weiterhin können auch mehrere Filtermittelstapel in einem Gehäuse angeordnet werden. In der Fig. 1 ist lediglich eine Suspensionszuleitung 3 und eine entsprechende Suspensionsableitung 4 pro Filtermittel 6 dargestellt. Es ist jedoch vorgesehen, dass mehrere, annähernd gleichmäßig horizontal über die Behälterwand 7 verteilt, angeordnet werden. Gerade durch das Vorsehen von mehreren, insbesondere zwei bis fünfzig solcher Suspensionszuleitungen 3 pro Filtennittel 6, wird eine effektive Überströmung der Filtermittel 6 erzielt. Sind diese über den Umfang des Behälters 2 gleichmäßig verteilt, so wird dieser Effekt weiter verbessert. Ferner können die einem Filtermittel 6 zugeordneten Suspensionszuleitungen 3 in verschiedenen Höhen angeordnet sein, wodurch der Einstrom der Suspension variiert, was den Abtrag an Partikeln weiter verbessert (vgl. Fig. 9). Allgemein ausgedrückt, erfolgt die Filteranordnung derart, dass zwei Freiheitsgrade als unabhängige, frei einstellbare Parameter - Druck und Anströmgeschwindigkeit - zur Verfügung stehen, um beides, die Filterleistung und den Grad des Rückstandsabtrags (sog. Abrasion) auf der Filteroberfläche mittels "Cross-Flow" zu beeinflussen. Einflussparameter werden über die Anströmgeschwindigkeit und die Druckverhältnisse im Behälter 2 sowie in den Suspensionszu- und ableitungen gesetzt. Das Filtrationsverfahren kann durch weitere Regenerations- bzw. Reinigungsschritte ergänzt werden. So kann durch eine Pulsation der Anströmgeschwindigkeit, pulsartige Luftbeimischung, Ultraschall oder sonstige mechanische Schwingungserregung an Teilen der Filtervorrichtung 1 bzw. des Gesamtaufbaus (Beispiel: schwingende Lagerung, Rüttelwerke, Unwuchten, Exzentereinsatz, etc.) eine Verbesserung der Abrasion erzielt werden.

An Hand der Fig. 1 soll ein weiteres Ausführungsbeispiel der Erfindung beschrieben werden. Die erfindungsgemäße Filtervorrichtung 1 kann in geeigneter Größe dimensionierte Rotationskörper zwischen den einzelnen Filtermitteln 6 aufweisen. Diese Rotationskörper sind Schwimmgegenstände, die die Form von beispielsweise Scheiben, Ringen, Kugeln, Pyramiden oder Quadern aufweisen. Sie werden mit der Strömung mitbewegt und führen auf Grund ihrer Rollreibung bzw. der durch sie bedingten Querschnittsverjüngung zu lokal erhöhten Überströmgeschwindigkeiten an der Filteroberfläche und verbesserter Abrasion des Filterrückstands von der Filteroberfläche.

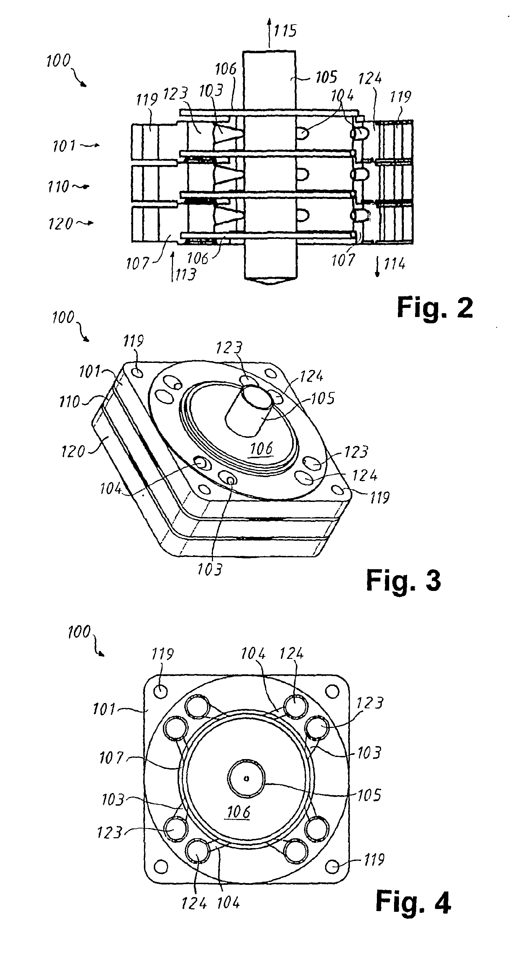

Die Fig. 2 bis 4 zeigen ein weiteres Ausführungsbeispiel der Erfindung. Bei der Filtervorrichtung 100 handelt es sich um eine Filtervorrichtung in Modulbauweise. Es sind dabei einzelne Filtervorrichtungsmodule übereinander bzw. hintereinander angeordnet, sie bilden dabei eine sog. Kolonne. Dies ist von Vorteil, da so einfach durch Anfügen eines oder mehrerer weiterer Module die Filtervorrichtung vergrößert und damit die Filtrationsleistung gesteigert werden kann, ohne dass es hierzu größerer Umbaumaßnahmen oder gar des Austausches der gesamten Filtervorrichtung durch eine solche mit größerer Filtrationsleistung bedürfte. Selbiges gilt natürlich auch für eine Verkleinerung der Filtervorrichtung. Im Ausführungsbeispiel der Fig. 2 bis 4 sind drei Filtermodule 101, 110, 120 hintereinander angeordnet. Jedes einzelne Filtermodul 101, 110, 120 weist jeweils ein Filtermittel 106 auf. Das Filtrat wird über die Filtratableitung 105 abgeleitet, angedeutet durch den Pfeil 115. Ferner sind für jedes Filtermodul 101, 110, 120 separate Suspensionszuleitungen 103 und Suspensionsableitungen 104 vorgesehen. Wie unter Fig. 1 ausgeführt, kann dabei für jedes Filtermodul lediglich jeweils eine Suspensionszu- und - ableitung vorgesehen sein, oder aber ein Vielzahl von diesen. Jede Suspensionszuleitung 103 und jede Suspensionsableitung 104 mündet in eine Suspensionssammelzuleitung 123 bzw. eine Suspensionssammelableitung 124, über die die Suspension dem Filtermodul 101, 110, 120 zentral zugeführt (Pfeil 113) bzw. abgeführt (Pfeil 114) wird. Bei der Anordnung mehrerer Filtermodule 101, 110, 120 hintereinander kommen die Suspensionssammelleitungen 123, 124 übereinander zu liegen, wodurch die Suspension über diese der Filtervorrichtung 100 zugeführt wird. Zur Abdichtung der Sammelleitungen können Dichtungen vorgesehen sein (nicht dargestellt). Im Ausführungsbeispiel der Fig. 2 bis 4 ist lediglich ein Filtermittel 106 pro Filtermodul 101, 110, 120 vorgesehen. Es können jedoch auch mehrere Filtermittel 106 in einem Modul vereint sein. Prinzipiell werden durch die Modulbauweise Einheiten von Filtermitteln 106 zusammengeschlossen, die dann mit anderen Modulen zu einer Filtervorrichtung 100 angeordnet werden können. Eine solche Einheit könnte beispielsweise 1 m² Filterfläche umfassen. Ferner können beispielsweise auch Module aneinandergereiht werden, deren Filtermittel unterschiedliche Filtrationseigenschaften aufweisen, beispielsweise eine unterschiedliche Porengröße. Die Filtrate der einzelnen Module können dann dem jeweils nächstliegenden Modul als Suspension zugeführt werden, wodurch in einer einzigen Filtervorrichtung eine Vielzahl an Filtrationsschritten durchgeführt werden können. Die Filtermittel 106 können in jedem Filtermodul 101, 110, 120, ähnlich wie in der Filtervorrichtung 1 der Fig. 1, über der Filtratableitung 105 befestigt sein. Abweichend davon ist vorgesehen, dass die Filtermittel 106 alternativ oder zusätzlich in der Behälterwand 107 befestigt sind. Dies ist dann von Vorteil, wenn Filtermittel 106 mit vergleichsweise großem Durchmesser eingesetzt werden sollen. Durch die Befestigung der Filtermittel 106 im Randbereich wird eine Schwingung der Filtermittel 106 im Einsatz, d.h. während des Filtrationsvorganges unterbunden bzw. reduziert, wodurch sich die Bruchgefahr der Filtermittel 106 mindert, was insbesondere bei Keramikfiltern von Bedeutung ist. Im Bedarfsfall ist für eine derartige Befestigung noch eine Dichtung (nicht dargestellt) vorzusehen, um die Abdichtung der Module gegeneinander zu gewährleisten. Die Filtermodule 101, 110, 120 werden miteinander über eine Verschraubung 119 oder ähnliche Befestigungsmittel verbunden. In der Darstellung der Fig. 4 ist ein Ausführungsbeispiel einer Anordnung an Suspensionszuleitungen 103 und Suspensionsableitungen 104 dargestellt. Es wird deutlich, dass diese tangential angeordnet sind, so dass sowohl die Zu- als auch die Ableitung an Suspension tangential erfolgt. Sämtliche Suspensionszuleitungen 103 und Suspensionsableitungen 104 sind in Fig. 4 gleich ausgerichtet, d.h. die Suspensionszuleitungen 103 sind linkstangential ausgerichtet, der Einstrom erfolgt folglich im Uhrzeigersinn, und die Suspensionsableitungen 104 sind rechtstangential ausgerichtet, so dass die Ableitung der Suspension im Gegenuhrzeigersinn erfolgt. Es ist jedoch vorgesehen, dass sowohl die Suspensionszuleitungen 103 als auch die Suspensionsableitungen 104 identisch ausgerichtet sind, d.h. beispielsweise beide im Uhrzeigersinn oder beide im Gegenuhrzeigersinn. Ferner ist vorgesehen, dass die Suspensionszuleitungen 103 und/oder die Suspensionsableitungen 104 untereinander verschieden ausgerichtet sind. So können beispielsweise jede zweite Suspensionszuleitung 103 und/oder Suspensionsableitungen 104 linkstangential und die übrigen rechtstangential ausgerichtet sein.

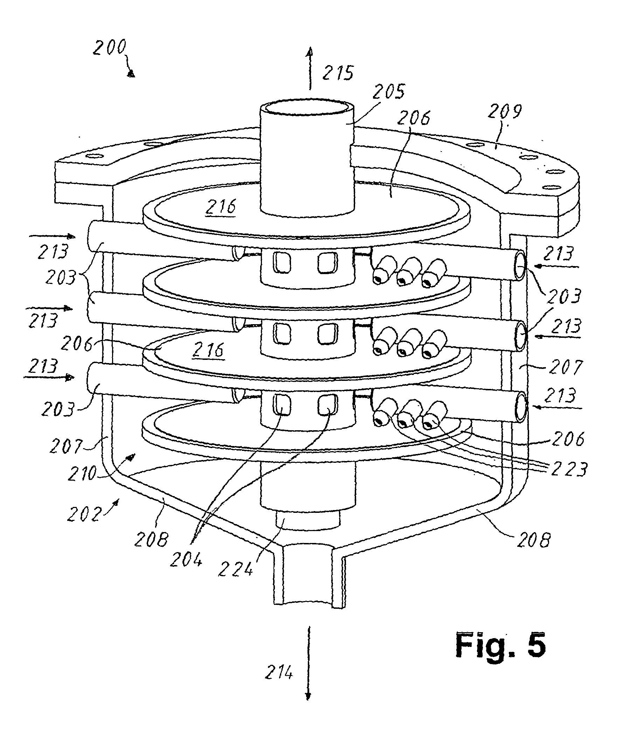

In Fig. 5 ist ein weiteres Ausführungsbeispiel einer Filtervorrichtung 200 in perspektivischer, teilweise geschnittener Darstellung gezeigt. Die Filtervorrichtung 200 weist einen Behälter 202 auf, der aus der Behälterwand 207, dem Behälterdeckel 209 und dem Behälterboden 208 besteht. In der Behälterwand 207 sind Suspensionszuleitungen 203 angeordnet (Pfeil 213). Die Suspensionszuleitungen 203 reichen in den Behälterinnenraum 210 hinein, zwischen die Filtermittel 206. Dort strömen sie Suspension über Düsen 223 auf die Oberflächen 216 der Filtermittel 206. Die Filtermittel 206 sind, wie in allen anderen Ausführungsbeispielen der Erfindung, ortsfest angeordnet. Es können pro Suspensionszuleitung 203 mehrere oder auch nur eine Düse 223 vorgesehen sein, im Ausführungsbeispiel der Fig. 5 sind es drei. Die Suspensionszuleitungen 203 können dabei ortsfest oder schwenk- bzw. drehbar ausgeführt sein. Da die Suspension über den Filtermitteln 206 eingeströmt wird, wird auf deren Oberfläche 216 eine Strömung erzeugt, die sich dort fortsetzt und Partikelablagerungen verhindert bzw. abgelagerte Partikel ablöst und so den Aufbau eines Filterkuchens verhindert. Auch hierbei erfolgt die Suspensionseinströmung tangential. Es wird die Suspension nicht senkrecht auf die Filtermittel 206 aufgebracht, sondern schräg, wie aus Fig. 5 deutlich hervorgeht. Die tangentiale Einströmung gewährleistet, dass sich die Strömung auf den Filtermitteln 206 fortsetzt und so über eine gewisse Fläche hinweg für die erwünschte Abrasion sorgt. Die Ableitung der Suspension (Pfeil 214) erfolgt über die Achse des Behälters 202. Dort ist nicht nur die Filtratableitung 205 (Pfeil 215) angeordnet, sondern auch die Suspensionsableitung. In die zentrale Suspensionssammelableitung 224 münden im Filtermittelbereich zahlreiche Suspensionsableitungen 204. Wie auch in den Ausführungsbeispielen der Fig. 1 bis 4, weist auch die Filtervorrichtung 200 für jedes Filtermittel 206 mehrere Suspensionszu- und -ableitungen auf, die insbesondere gleichmäßig über den Umfang des Behälters 202 bzw. dessen Achse verteilt sind.

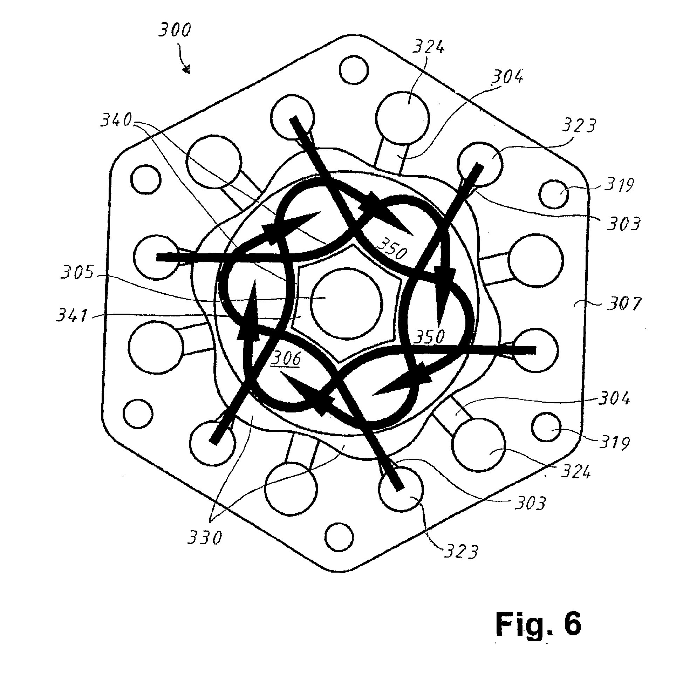

Figur 6 zeigt einen Schnitt durch eine Filtervorrichtung 300 und eine Aufsicht darauf. Diese weist einen Behälter auf, in dem zumindest ein Filtermittel 306 angeordnet ist. In der Behälterwand 307 sind Suspensionszuleitungen 303 und Suspensionsableitungen 304 angeordnet, welche jeweils in Suspensionssammelzuleitungen 323 bzw. -ableitungen 324 münden. Zur Ableitung des Filtrates ist eine Filtratableitung 305 vorgesehen. Die Behälterwand 307 weist mehrere Ausbuchtungen 330 auf. Diese sind gerundet gestaltet. Ihre Anzahl ist beliebig. Es sind die Suspensionszuleitungen 303 vorzugsweise in dem Bereich der Ausbuchtung 330 angeordnet, die von der Filtratableitung 305 am weitesten entfernt ist, sozusagen auf dem Bauch der Ausbuchtung 330. Die Suspensionsableitungen 304 sind dagegen bevorzugt dort angeordnet, wo die Ausbuchtung 330 der Filtratableitung 305 am nächsten ist. Neben den Ausbuchtungen 330 auf der Behälterwand 307 sind überdies Ausbuchtungen 340 auf dem Zentralrohr 341 vorgesehen. Die "Bäuche" der Ausbuchtungen 340 liegen vorzugsweise den "Bäuchen" der Ausbuchtungen 330 annähernd gegenüber, wobei sich eine leichte gegenseitige Versetzung als für die Strömung der Suspension vorteilhaft herausgestellt hat. Die Ausbuchtungen 330 und 340 tragen zur Verbesserung der Strömung auf den Filtermitteln 306 und damit im Behälterinnenraum bei. Die von den Suspensionszuleitungen 303 verursachte Strömung 350 ist durch Pfeile dargestellt. Jede Suspensionszuleitung 303 erfüllt eine doppelte Funktion, zum einen führt sie dem Behälter neue Suspension zu und zum anderen beschleunigt sie bereits darin enthaltene Suspension. Aus dem Strömungsbild der Fig. 6 ergibt sich, dass das Filtermittel 306 großflächig und über sowohl die Innen- als auch die Außenbereiche des Filtermittels 306 überströmt wird. Durch die vorteilhafte Behältergeometrie werden somit die abrasiven Eigenschaften der erfindungsgemäßen Filtervorrichtung weiter verbessert. Die Ausbuchtungen 330 und 340 können auch zutreffend als Wellen, Dellen oder Beulen bezeichnet werden. Es handelt sich folglich um lokale, muschelförmige Austiefungen, die sich über Teilbereiche der Behälterwand 307 bzw. dem Zentralrohr 341 erstrecken können. Es sind also gerundete, wannenförmige, auch kreisrunde Vertiefungen in der Behälterwand 307 und/oder dem Zentralrohr 341 ausgebildet. Die Oberflächenstruktur der Behälterwand 307 und des Zentralrohrs 341 ähnelt folglich der eine Vielzahl an Dellen aufweisenden Oberfläche eines Golfballes. Andererseits können die Ausbuchtungen 330 und 340 sich auch über größere Bereiche der Behälterwand 307 und des Zentralrohrs 341 erstrecken, wobei die Ausdehnung in vertikaler Richtung bevorzugt ist. Die Ausbuchtungen weisen dann eher eine Rillenform auf, so dass die Oberfläche der Behälterinnenwand der eines Waschbrettes ähnelt. Bei Ausbildung in Modulbauweise sind einzelne Module über die Bohrungen 319 verbindbar.

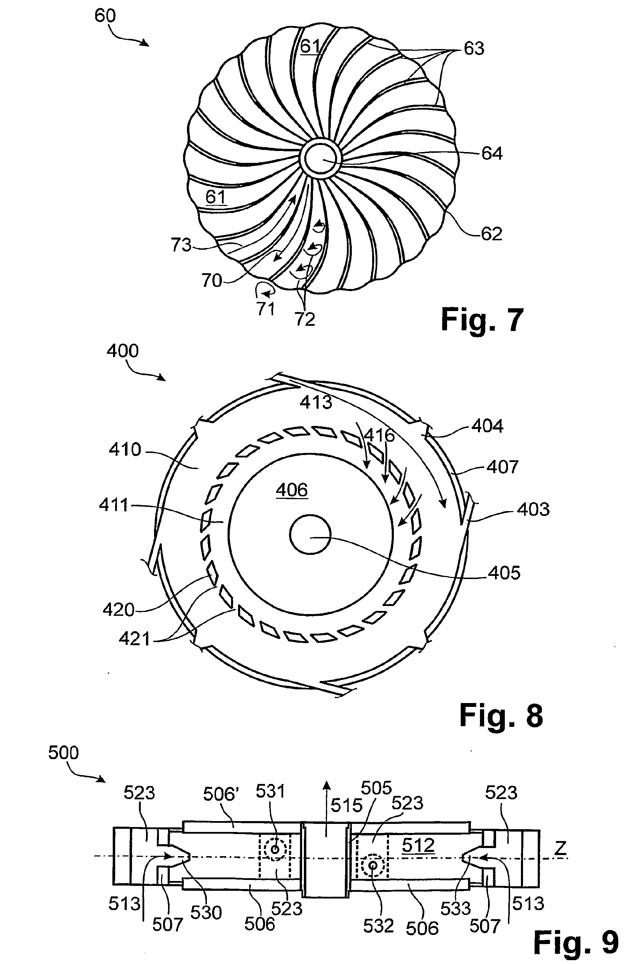

Figur 7 zeigt ein Ausführungsbeispiel eines erfindungsgemäßen Filtermittels 60. Das Filtermittel 60 ist ein scheibenförmiges Filtermittel in der Art einer Rundscheibe. Das Filtermittel 60 weist eine Oberfläche 61 und einen Rand 62 auf. Erfindungsgemäß ist nun vorgesehen, dass die Oberfläche 61 Profilierungen 63 aufweist. Diese Profilierungen 63 sind vom Zentrum 64 zum Rand 62 des Filtermittels 60 hin ausgebildet. Dadurch wird die Suspension über die Oberfläche 61 des Filtermittels 60 gelenkt. Die Profilierung 63 erfolgt folglich so, dass sie zur Strömungssteuerung eingesetzt werden kann. In Abhängigkeit von der Richtung des Einstromes wird die Strömung über die Oberfläche geleitet, entweder in Richtung vom Zentrum 64 zum Rand 62 oder umgekehrt. Es sind in der Fig. 7 beide Strömungsrichtungen durch Strömungspfeile 70 und 73 angedeutet. In der in der Fig. 7 dargestellten Profilierungsweise führt ein Einströmen im Uhrzeigersinn zu einer Strömung vom Zentrum 64 zum Rand 62 (Pfeil 70), und in der Filtervorrichtung folglich von der Behältermitte zur Behälterwand. Wird dagegen tangential im Gegenuhrzeigersinn eingeströmt, so bewirkt dies eine Strömung vom Rand 62 zum Zentrum 64 (Pfeil 73), was in der Filtervorrichtung folglich eine Strömung von der Behälterwand zur Behältermitte hervorruft. Weiterhin bewirkt die Profilierung 63 auf der Oberfläche 61 Verwirbelungen, dargestellt durch die Pfeile 72. Durch diese "Kleinströmungen" auf der Oberfläche 61 des Filtermittels 60 wird der Abtrag von Partikeln begünstigt. Das Filtermittel 60 weist neben der Profilierung der Oberfläche 61 auch einen profilierten Rand 62 auf. Der Rand 62 ist wellenförmig gestaltet, er weist dementsprechend Vorsprünge und Ausbuchtungen auf. Auch diese Profilierung bewirkt eine Verwirbelung von Suspension, dargestellt durch den Pfeil 71. Dies führt ebenfalls zu einer Verbesserung der Partikelabrasion. Die Profilierungen von Oberfläche 61 und Rand 62 können sowohl kumulativ als auch alternativ vorgesehen sein. Ferner können sowohl die gesamte Oberfläche 61 und/oder der gesamte Rand 62 profiliert sein, als auch nur Teilbereiche davon. Die Profilierungen können beispielsweise die Form einer gewellten Oberfläche, von Strukturmustern (z.B. prismen- oder beulenartige Einprägungen und Vertiefungen), oder von spiralförmig oder beliebig angeordneten Nuten annehmen. Sie führen zu Lokalströmungen und verstärkter Abrasion und damit zu einer gezielten, räumlich beeinflussbaren Erhöhung des "Cross-Flows" und ermöglichen einen Abtrag des Filterkuchens von der Filteroberfläche. Das Filtermittel 60 ist als rotationssymmetrische Rundscheibe dargestellt. Die Profilierung der Oberfläche lässt sich jedoch auch auf anderen Filtermitteln vorsehen, beispielsweise auf scheibenförmigen Filtermitteln anderer Art, z.B. kassettenförmigen, und auch auf zylindrischen Filtermitteln. Das Filtermittel 60 ist vorzugsweise ein Keramikfilter, ein Verbundstofffilter, insbesondere aus Kunststoff, oder ein Metallfaserfilter. Es kommen insbesondere auch neuartige Filtermittel zum Einsatz, welche durch spezielle Bearbeitung schaumartig ausgeführt sind, z.B. Glaswerkstoffe oder Metalle. Auch der Einsatz neuartiger Filtermittel, bei denen eine mikromechanische Porosität durch entsprechende Bearbeitung eines ansonsten nicht durchlässigen Werkstoffes oder Bauteils erreicht wird, z.B. gezielte Mikroperforierung dünner Edelstahlfolien, Ionenbeschuss oder Plasmabehandlung dünner Membrane, etc., ist vorgesehen. Der Einsatz von Hohlfilterscheiben aus Keramik, welche eine erheblich verbesserte Hitzebeständigkeit aufweisen, ist bevorzugt. Damit ergibt sich eine wesentlich vereinfachte Möglichkeit zur Reinigung bzw. Regeneration der Filterhilfsmittel, beispielsweise mit Dampf, heißen oder reaktiven Gasen, sonstigen Gemischen bzw. mittels Pyrolyse durch kontrollierte Verbrennung anorganischer oder organischer Filterrückstände. Es ist ferner die Möglichkeit zur im Lebensmittelbereich und Gesundheitswesen dringend erforderlichen Sterilisierbarkeit gegeben. Überdies erlaubt die Temperaturstabilität die Filtration heißen Filtrationsgutes. Ferner bringen Keramikfilter den Vorteil mit sich, dass eine Rückspülung ermöglicht wird. Dabei wird Filtrat oder Suspension über die Filtratableitung dem Behälter wieder zugeführt, die Flussrichtung sozusagen umgekehrt. Ein solcher Rückspülschritt kann als gesonderter Spülschritt in den Filtrationsvorgang eingebaut werden. Keramikfilter erlauben dabei die Verwendung relativ hoher Drücke für eine erheblich effizientere und schnellere Frei- oder Rückspülung der Filteraufbauten. Allgemein weisen erfindungsgemäße Filtermittel einen innen liegenden Grundkörper auf, in dem die Fortleitung des Filtrates hin zur Filtratableitung erfolgt, und eine darüber angebrachte Membran, deren Porengröße die Filtration bestimmt, sog. Hohlfilterscheiben. Das Filtermittel 60 kann konisch oder bauchförmig gewölbt sein. So kann z.B. die Oberfläche 61 konvex oder konkav ausgeführt sein.

In Fig. 8 ist noch ein weiteres Ausführungsbeispiel einer erfindungsgemäßen Filtervorrichtung 400 dargestellt. Die Filtervorrichtung 400 weist ebenfalls einen Behälter auf, von dem in Fig. 8 nur die Behälterwand 407 abgebildet ist. Der Einstrom und die Ableitung an Suspension erfolgt über Suspensionszuleitungen 403 bzw. Suspensionsableitungen 404, welche in der Behälterwand 407 angeordnet sind. Der Einstrom erfolgt dabei tangential rechts- oder linksdrehend, wodurch eine Schwerkraftseparierung möglich wird. Weiterhin weist die Filtervorrichtung 400 zumindest ein zentral angebrachtes Filtermittel 406 auf. Das Filtrat wird über die Filtratableitung 405 abgeleitet. Im Behälter der Filtervorrichtung 400 sind nun zwei Behälterkompartimente 410, 411 ausgebildet. Diese bilden Kammern, die durch die Trennwand 420 voneinander getrennt sind. In der Trennwand 420 sind Perforationen 421 vorgesehen, durch die die beiden Behälterkompartimente 410, 411 miteinander verbunden sind. Diese Perforationen 421 können verschiedene Gestalt aufweisen. Es kann sich dabei um bloße Durchbrüche handeln, sie können schräg geführt sein, wie im Ausführungsbeispiel der Fig. 8, und sie können auch innerhalb einer Trennwand 420 variieren. Innerhalb der "Filtervorrichtung 400 werden nun zweierlei Strömungskreisläufe erzeugt, ein Primär- und ein Sekundärkreislauf. Die durch die Suspensionszuleitungen 403 eingeströmte Suspension wird sich dabei zunächst in einer Kreisbahn im Behälterkompartiment 410 bewegen und den sog. Primärkreis bilden, angedeutet durch den Pfeil 413. Die Suspension wird jedoch durch die Perforationen 421 in der Trennwand 420 teilweise abgelenkt und in das Behälterkompartiment 411 gelenkt werden, dargestellt durch die Pfeile 416 und als Sekundärkreis bezeichnet. In diesem trifft die Strömung auf die Filtermittel 406, wo sie sich fortsetzt und die Filtermittel 406 vor Zusetzen mit Partikeln bewahrt. Vorteilhaft ist, dass im Primärkreis die größeren Partikel abgetrennt werden durch die Zentrifugenwirkung der tangential einströmenden Suspension. Die abgetrennten Partikel werden in Richtung Behälterboden bewegt, wo sie über ein Ablassventil entnommen werden können. Die größeren Partikel gelangen somit gar nicht erst auf die Filtermittel 406, sondern sind bereits früher abgetrennt. Alternativ zu einer Trennwand 420 mit Perforationen 421 können auch Leitbleche vorgesehen sein, die eine Auftrennung der Strömung in zwei Kreisläufe bewirken und die Strömung auf die Filtermittel lenken. Bei der Ausführungsform der Fig. 8 kann es sinnvoll sein, dass die Filtervorrichtung 400 nur jeweils eine Suspensionszu- und -ableitung aufweist, da durch die Führung der Strömung als Primär- und Sekundärkreislauf im Behälter die Suspension gleichmäßig verteilt wird und durch Hindurchleiten durch die Perforationen 421 in das Behälterkompartiment 411 eine Druckerhöhung erfolgt, wodurch die Suspension eine Beschleunigung erfährt.

Fig. 9 zeigt eine systematische Darstellung eines Längsschnittes durch ein weiteres Ausführungsbeispiel einer erfindungsgemäßen Filtervorrichtung 500 in Modulform. Wie bereits unter den Ausführungen zu der Fig. 1 angedeutet, ist vorgesehen, dass zumindest die Suspensionszuleitungen, aber auch die Suspensionsableitungen in unterschiedlichen Höhen, anders ausgedrückt in unterschiedlichen Ebenen, um den Umfang des Behälters angeordnet sein können. In Fig. 9 ist ein Ausführungsbeispiel einer derartigen Filtervorrichtung dargestellt. Es sind der besseren Darstellbarkeit halber lediglich die Suspensionszuleitungen 530, 531, 532 und 533 eingetragen, die Suspensionsableitungen sind nicht dargestellt. Sie können jedoch sowohl in bekannter Weise, d.h. wie unter den übrigen Fig. beschrieben, ausgebildet sein, als auch ähnlich versetzt angeordnet sein wie die Suspensionszuleitungen 530-533. Weiterhin ist in Fig. 9 lediglich ein Modul dargestellt, mit Filtermittel 506, Behälterwand 507, Suspensionssammelzuleitungen 523, Suspensionszuleitungen 530-533 und Filtratableitung 505. Darüber hinaus ist noch das Filtermittel 506' des Moduls dargestellt, das oberhalb des dargestellten angeordnet ist. In der Behälterwand 507 sind um den Umfang des Behälters verteilt mehrere Suspensionszuleitungen 530-533 ausgebildet. Diese befinden sich relativ zueinander auf unterschiedlichen Höhen des Behälters. Die Suspensionszuleitungen 530 und 533 befinden sich auf ungefähr derselben Höhe, angedeutet durch die strichpunktierte Linie Z. Die Suspensionszuleitung 531 ist dagegen etwas oberhalb dieser Ebene angeordnet und die Suspensionszuleitung 532 etwas unterhalb. Die Suspension wird in zunächst den Suspensionssammelzuleitungen 523 zugeführt (Pfeile 513), von wo aus sie über die Suspensionszuleitungen 530-533 dem Inneren des Behälters zugeführt wird und wo sie das Filtermittel 506 überströmt und über die Unterseite des Filtermittels 506' strömt. Die Behälterinnenwand 512 kann ebenso wie die Achse der Filtratableitung 505 strukturiert sein, wie unter Fig. 6 beschrieben. Die Abführung des Filtrats ist durch den Pfeil 515 dargestellt. Da sich durch die geschnittene Darstellung eine Aufsicht auf die Behälterinnenwand 512 ergibt, sind die Suspensionssammelzuleitungen 523 der Suspensionzuleitungen 531 und 532 strichliert dargestellt, sie befinden sich in bzw. hinter der Behälterwand 507. Selbiges gilt für die Suspensionszuleitungen 531 und 532, von denen lediglich die Austrittsöffnung mit im Vergleich zur Zuführung verringertem Querschnitt sichtbar ist (vgl. Suspensionszuleitungen 530, 533), der Rest ist ebenfalls strichliert dargestellt.

Die Fig. 10 und 11 zeigen ein weiteres Ausführungsbeispiel der Erfindung. Die Filtervorrichtung 600 weist eine Anzahl an Filtermitteln 606 auf. Das Filtrat wird über die Filtratableitung 605 abgeleitet, angedeutet durch den Pfeil 615. Ferner sind jedem Filtermittel 606 Suspensionszuleitungen 603 und Suspensionsableitungen 604 zugeordnet. Jede Suspensionszuleitung 603 und jede Suspensionsableitung 604 mündet in eine Suspensionssammelzuleitung 623 bzw. eine Suspensionssammelableitung 624, über die die Suspension der Filtervorrichtung 600 zugeführt (Pfeil 613) bzw. abgeführt (Pfeil 614) wird. Die Filtennittel 606 können über der Filtratableitung 605 befestigt, d.h. zentral gelagert sein. Abweichend davon ist vorgesehen, dass die Filtermittel 606 alternativ oder zusätzlich in der Behälterwand 607 befestigt sind. In der Darstellung der Fig. 11 ist ein Ausführungsbeispiel einer Anordnung an Suspensionszuleitungen 603 und Suspensionsableitungen 604 dargestellt. Es wird deutlich, dass diese tangential angeordnet sind, so dass sowohl die Zu- als auch die Ableitung an Suspension tangential erfolgt. Die Suspensionszuleitungen 603 und Suspensionsableitungen 604 sind in Fig. 11 variierend ausgerichtet. Die Suspensionszuleitungen 603a und 603c sind identisch, nämlich linkstangential ausgerichtet, der Einstrom erfolgt folglich im Gegenuhrzeigersinn. Die Suspensionszuleitungen 603b und 603d sind dagegen rechtstangential ausgerichtet, so dass der Einstrom im Uhrzeigersinn erfolgt. Ähnliches gilt für die Suspensionsableitungen 604a und 604c, welche rechtstangential ausgerichtet sind, wohingegen die Suspensionsableitungen 604b und 604d linkstangential angeordnet sind. Es ist jedoch ebenso vorgesehen, dass sowohl die Suspensionszuleitungen 603 als auch die Suspensionsableitungen 604 identisch ausgerichtet sind, d.h. beispielsweise beide im Uhrzeigersinn oder beide im Gegenuhrzeigersinn. Ferner ist vorgesehen, dass die Suspensionszuleitungen 603a-d und/oder die Suspensionsableitungen 604a-d untereinander identisch, jedoch gegenseitig unterschiedlich ausgerichtet sind. So können beispielsweise alle Suspensionszuleitungen 603a-d linkstangential und die Suspensionsableitungen 604a-d rechtstangential ausgerichtet sein. Es ist vorgesehen, dass die Filtervorrichtung 600 ein Rührorgan 650 aufweist, das in den Fig. 10 und 11 schraffiert dargestellt ist. Das Rührorgan 650 wird durch die Strömung angetrieben, welche durch den tangentialen Einstrom erzeugt wird. Dadurch wird die Oberfläche des Filtermittels 606 von Ablagerungen befreit, die Entstehung eines Filterkuchens wird verhindert. Ähnlich wie die unter Fig. 1 beschriebenen Rotationskörper wird das Rührorgan 650 über das Filtermittel 606 bewegt und ebenfalls von der Strömung der Suspension angetrieben, seine Bewegung erfolgt folglich, im Gegensatz zu aus dem Stand der Technik bekannten Rührorganen, passiv. Das Rührorgan 650 kann unterschiedliche Ausgestaltungen annehmen, so kann es eine Flügelform, wie in Fig. 11 dargestellt, oder Bürstenform oder Leistenform aufweisen. Ferner kann die Anzahl an Flügeln, Borsten oder Leisten variieren, im Ausführungsbeispiel der Fig. 11 sind vier Flügel 651 dargestellt. Ferner kann es, wie in Fig. 11 gezeichnet, zentral gelagert sein. Es kann aber ebenso freischwebend, ähnlich den oben beschriebenen abrasiven Körpern, ausgebildet sein oder am Umfang gelagert sein. Fig. 10 zeigt den Verlauf der Suspension während des Filtrationsvorganges in der Filtervorrichtung 600. Die Suspension wird über die Suspensionssammelzuleitung 623 den einzelnen Suspensionszuleitungen 603 zugeführt (Pfeil 613), wo sie in den Innenraum 610 des Behälters 602 gelangt. Von dort wird sie über die Filtermittel 606 gefiltert. Das Filtrat fließt über die Filtratableitung 605 ab, dargestellt durch den Pfeil 615. Ungefilterte Suspension wird über die Suspensionsableitungen 604 den Suspensionssammelableitungen 624 zugeführt, wo deren zentrale Ableitung erfolgt (Pfeil 614).

Eventuell sich ansammelnde Feststoffe und Partikel können über einen Partikelablass 611 im Behälterboden 608 abgeführt werden (Pfeil 612). Die Filtervorrichtung 600 kann ebenso in Modulbauweise gefertigt sein, wie unter den Fig. 2 bis 4 beschrieben. Ferner kann die Oberfläche strukturiert sein, analog zu der Ausführung in Fig. 6.

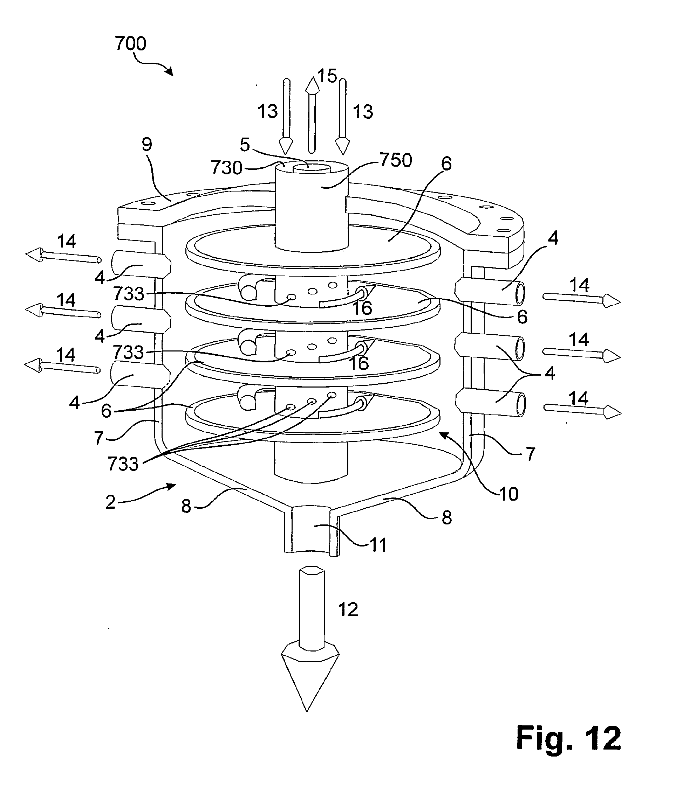

In Fig. 12 ist ein weiteres, bevorzugtes Ausführungsbeispiel der Erfindung dargestellt. Gleiche Teile sind dabei mit den gleichen Bezugszeichen versehen, wie in Fig. 1, so dass für diese auf deren Beschreibung verwiesen wird. Die Zuleitung der Suspension erfolgt nun nicht über Suspensionszuleitungen in der Behälterwand (vgl. Bezugszeichen 3 in Fig. 1), sondern über das Zentralrohr 750. Dieses weist hierfür eine zentrale Suspensionszuleitung 730 auf. Die Suspension wird dann über tangentiale Öffnungen 733 ausgebracht und über den Filtermitteln 6 in Strömung versetzt. Diese Öffnungen 733 können als Düsen ausgebildet sein, insbesondere in der Form einer Punktdüse, Flachdüse oder einer Düse mit beweglichem, insbesondere rotierendem Düsenstrahl. Auch diese Öffnungen bzw. Düsen sind so angeordnet, dass die Suspension dem Behälterinneren tangential zuführbar ist. Folglich steht die Längsachse der Düsen nicht senkrecht auf der Fläche, die parallel zum Ansatzpunkt der Düse 733 an der Suspensionszuleitung 730 liegt, sondern in einem davon abweichendem Winkel. Die Öffnungen 733 bzw. Düsen der Suspensionszuleitung 730 sind, anders ausgedrückt, schräg angeordnet und ausgerichtet. Das Zentralrohr 750 weist darüber hinaus auch die Filtratableitung 5 auf. Wie auch im Ausführungsbeispiel der Fig. 1 ist die Filtratableitung 5 mit den Filtermitteln 6 verbunden, so dass die gefilterte Suspension, das Filtrat, von den Filtermitteln 6 in die Filtratableitung gelangt und somit von der Filtervorrichtung 1 bzw. 700 abgeführt werden kann. Das Zentralrohr ist gekammert gestaltet, weist zwei ineinander geschobene und mit entsprechenden Verbindungen versehene Öffnungen auf oder beeinhaltet zwei oder mehr nebeneinander liegende Rohre, so dass sowohl der Filtrataustrag als auch der Suspensionseintrag über dieses Zentralrohr erfolgen kann.

Ein weiteres Ausführungsbeispiel der Erfindung soll anhand der Fig. 1 und 12 erläutert werden. Es ist vorgesehen, dass die Zufuhr an Suspension von der Behälterwand 7 aus erfolgt, wie für unter Fig. 1 beschrieben (Bezugszeichen 3). Die Ableitung der Suspension erfolgt nun jedoch nicht über in der Behälterwand 7 angebrachte Suspensionsableitungen, wie in den Fig. 1 und 12, sondern über das Zentralrohr 750. Anstelle der zentralen Suspensionszuleitung 730 wird nun eine zentrale Suspensionsableitung im Zentralrohr vorgesehen. Entsprechend weist das Zentralrohr eines solchen Ausführungsbeispiels im Zentralrohr sowohl die Filtrat- als auch die Suspensionsableitung auf. Es ist folglich ebenfalls gekammert gestaltet, weist zwei ineinander geschobene und mit entsprechenden Verbindungen versehene Öffnungen auf oder beeinhaltet zwei oder mehr nebeneinander liegende Rohre, so dass sowohl der Filtrat- als auch der Suspensionsaustrag über dieses Zentralrohr erfolgen kann. Die Öffnungen 733 führen dann entsprechend die Suspension der in dem Zentralrohr angeordneten zentralen Suspensionsableitung zu.

Grundsätzlich ist es auch angedacht, eine Filtervorrichtung zu gestalten, bei der im Zentralrohr sämtliche Zu- und Ableitungen angeordnet sind, d. h. sowohl die Filtratableitung als auch die Suspensionszu- und -ableitungen.

Anhand der Fig. 1 und 12 soll noch ein weiteres Ausführungsbeispiel der Erfindung erläutert werden. Es ist vorgesehen, dass im Zentralrohr 750 ein Schwingungserzeuger bzw. -erreger angeordnet wird. Dieser Schwingungserzeuger erzeugt Schwingungen einer bestimmten Frequenz. Dadurch wird die Filtervorrichtung 1 bzw. 700 in Schwingung versetzt. Insbesondere werden die Filtermittel 6 in Schwingung versetzt. Durch das Schwingen der Filtermittel wird das Zusetzen weiter verhindert. Sobald Partikel sich darauf absetzen wird nicht nur die tangentiale Strömung für deren Abtrag sorgen sondern auch die leichte Schwingung der Filtermittel, insbesondere der Keramikhohlfilterscheiben. Die von dem Schwingungserzeuger erzeugte Schwingung kann unterschiedliche Frequenzen haben, wobei die Frequenz mit der besten Reinigungseigenschaft leicht durch Versuche herausgefunden werden kann. Sie kann insbesondere auch im Ultraschallbereich liegen. In Versuchen stellte sich mit den im Handel erhältlichen Keramikhohlfilterscheiben mit einem Durchmesser von 312 mm eine Frequenz von ca. 50 Hz als besonders günstig heraus.

Anhand der Fig. 1 und 12 soll noch ein weiteres Ausführungsbeispiel der Erfindung erläutert werden. Es ist vorgesehen, dass wie bei aus dem Stand der Technik bekannten Filteraufbauten, das Filtermittelpaket eine Rotationsbewegung ausführt. Diese Rotationsbewegung kann zum einen von einem Motor angetrieben werden. Der Antrieb kann jedoch auch durch die Strömung der Suspension erzielt werden. Die Suspension wird dem Behälter mit einem gewissen Druck, beispielsweise ein bar, zugeführt. Es entsteht ein Flüssigkeitsstrom, der ein Filtermittelpaket oder ein einzelnes Filtermittel in eine Drehbewegung versetzen kann. Durch die Rotation des Filtermittels wird eine Schattenbildung weiter vermieden. Jeder Bereich einer Filtermittelscheibe befindet sich dadurch immer wieder in einer günstigen Anordnung zur Suspensionszuleitung. Eventuell auf der Oberfläche des Filtermittels abgelagerte Partikel werden so immer wieder abgetragen.

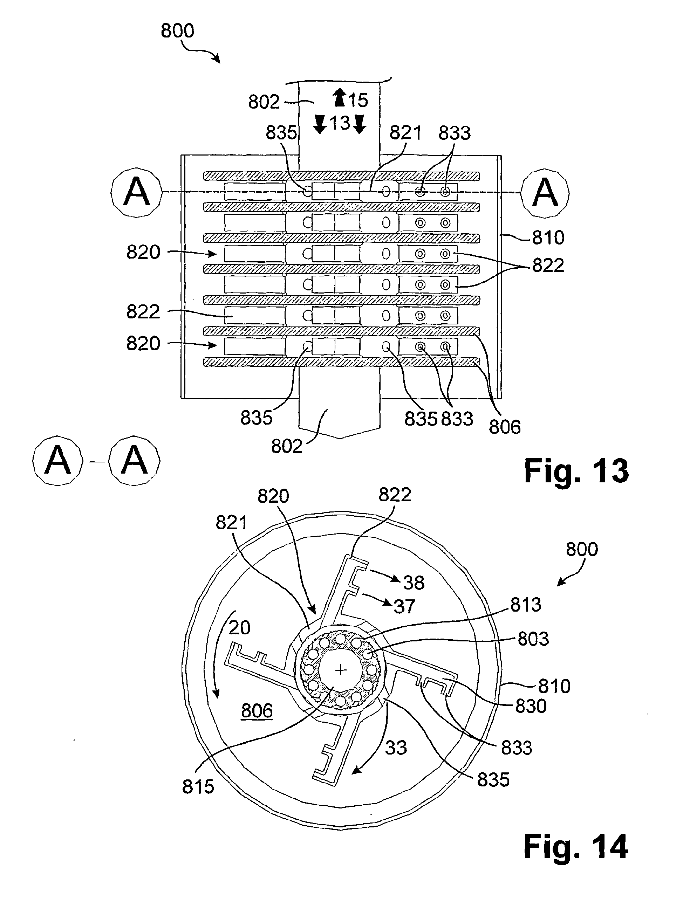

Die Fig. 13 und 14 zeigen schließlich noch ein weiteres Ausführungsbeispiel der Erfindung. Die Filtervorrichtung 800 weist wiederum ein Zentralrohr 802 auf, über die die Filtratabfuhr erfolgt, dargestellt durch den Pfeil 15. Die Filtratableitung erfolgt über Filtratableitungen und die Filtratsammelableitung 815. Die Zufuhr der Suspension erfolgt über das Zentralrohr 802, angedeutet durch die Pfeile 13. Hierfür sind in dem Zentralrohr zentrale Suspensionszuleitungen 803 mit entsprechenden Öffnungen 813 vorgesehen. Die Suspension verlässt folglich die zentralen Suspensionszuleitung 803 über die Öffnungen 813. Um das Zentralrohr 802 herum sind nun jedoch zwischen den Filtermitteln 806 Einströmer 820 angeordnet. Diese bestehen aus einem ringförmigen Lager 821, der das Zentralrohr 802 umschließt. Das ringförmige Lager 821 ist jedoch mit dem Zentralrohr 802 nicht fest verbunden, sondern umschließt dieses lediglich lose, d.h. der Einströmer 820 ist drehbar. Er weist ferner Fortsätze 822 auf, in denen die Suspensionszuleitung 830 verläuft. Diese Suspensionszuleitung endet in den Öffnungen 833. Ferner können auch am drehbaren Lager 821 Öffnungen 835 vorgesehen sein. Die, die Öffnungen 813 verlassende Suspension wird mit Hilfe des Einströmers 820 weiter geführt. Zum einen tritt die Suspension durch die Öffnungen 835 aus und überströmt so die Filtermittel 806. Dies ist durch den Pfeil 33 dargestellt. Weiter tritt Suspension in die Suspensionszuleitung 830 ein und wird in dieser über einen Teil des Filtermittels 806 hinweggeführt. Die Suspensionszuleitung 830 wird von der Suspension über die Öffnungen 833 verlassen, angedeutet durch die Pfeile 37 und 38. Wie sich aus der Fig. 14 deutlich ergibt, wird somit die Suspension direkt in bestimmte Bereiche des Filtermittels 806 verbracht. Durch den Einstrom an Suspension ergibt sich eine Drehbewegung des Einströmers 820, wodurch das Filtermittel 806 gleichmäßig überstrichen wird. Diese Drehbewegung des Einströmers 820 ist durch den Pfeil 20 dargestellt. Anders beschrieben handelt es sich bei den Einströmern 820 um Vorrichtungen bzw. Elemente, mit denen die Suspension über die Filtermittel 806 geführt werden kann. Als solche Elemente sind z.B. kurze Leitungsstücke oder Fortsätze 822 mit Öffnungen 833, die auf die Filtermitteloberfläche gerichtet sind, geeignet. Diese Leitungen ragen vom Zentralrohr 802 ausgehend in Richtung zum Umfang des Filtermittels, in der Art von Strahlen. Sie sind bevorzugt drehbar gelagert, wobei jedoch der Antrieb für die Drehbewegung nicht aus Energie verbrauchenden Vorrichtungen, wie Motoren etc. resultiert, sondern diese Einströmer 820 drehen sich von selbst, bedingt durch den Ausstoß an Suspension. Durch den Ausstoß der Suspension kommt eine Drehbewegung der Einströmer 820 zustande, wodurch die gesamte Filtermitteloberfläche im Laufe der Zeit überstrichen wird und somit überall gleichmäßig von Rückständen freigehalten wird. Alternativ zu den beschriebenen Leitungen oder Fortsätzen können auch anders gestaltete Elemente mit Öffnungen zum Einsatz kommen, wobei die Öffnungen so angeordnet sind, dass die Suspension über die Filtermittel geführt wird. Beispielhaft seien propellerartige Anordnungen, sternförmige oder sägeblattähnliche genannt. Die Einströmer können auch zusätzlich zu den oben erwähnten Öffnungen, über die eingeströmt wird, vorgesehen sein.

Weiterhin ist das Filtermittelpaket der Filtervorrichtung 800 nicht unmittelbar von einem Behälter umgeben, wie z. B. in Fig. 1 (vgl. Bezugszeichen 2). Die Filtervorrichtung 800 stellt damit eine Alternative zu den zuvor beschriebenen Filtervorrichtungen dar, welche jeweils einen Behälter aufweisen. In gewissen Anwendungsgebieten kann eine derartige Ausgestaltung vorteilhaft sein, beispielsweise in Bereichen, in denen die Filtration nur bei Unterdruck zu erfolgen braucht. Durch eine Saugpumpe kann beispielsweise der notwendige Unterdruck erzielt werden. Die Filtervorrichtung 800 kann dann in einen die Suspension enthaltenden Behälter eingebracht werden, der dann als Behälter der Filtervorrichtung anzusehen ist. Die Filtervorrichtung 800 befindet sich somit direkt in der Suspension und ist von ihr umgeben. Diese Ausbildung ist im Vergleich zu den anderen Ausbildungen kostengünstiger. Es entfällt nicht nur das Gehäuse, das das Filtermittelpaket umgibt, sondern auch die Suspensionsableitungen, da die Filtervorrichtung sich direkt in der Suspension befindet. Diese Variante der erfindungsgemäßen Filtervorrichtung ist besonders gut geeignet für solche Filtervorrichtungen, die Strömungsrichtung vom Inneren zum Umfang der Filtermittel hin vorsehen, wie beispielsweise die Filtervorrichtung 800 der Fig. 13 und 14. Auch eine Filtervorrichtung mit umgekehrter Strömungsrichtung, wie z. B. in Fig. 1 dargestellt, kann jedoch als eine derartige Variante ausgebildet werden. Hierfür wird um den Umfang der Filtermittel herum entweder eine zylindrische, doppelte Wandung vorgesehen, die Öffnungen aufweist, die zum Inneren des Filtemittelpaketes hinweisen, oder es werden Suspensionszuleitungen in der Form von Rohrleitungen um die Filtermittel herum angeordnet, die ebenfalls Öffnungen aufweisen, über die die Suspension ausgestoßen wird.

Schließlich kann zur längeren Führung der tangentialen Strömung um das Filtermittelpaket ein Leitring 810 vorgesehen sein. Dieser ist bevorzugt auf der Oberseite und auf der Unterseite offen; es handelt sich folglich nicht um ein mit dem Behälter 2 vergleichbares Element. Der Leitring 810 weist vorzugsweise die Form einer zylindrischen Wandung auf, wie in Fig. 14 dargestellt. Der Leitring kann jedoch auch eine andere Form haben. So kann mit Hilfe einer speziellen Gestaltung des Leitrings 810 die Suspension so geführt werden, dass Strudel und Wirbel erzeugt werden (Zyklon). Weiterhin ist es möglich, verschiedene Phasen der Suspension abzuziehen. Bei trichterförmiger Gestaltung des Leitringes 810 werden sich im Bereich des Trichters leichte Stoffe, z. B. Öle sammeln. Bei taillierter Gestaltung, d. h. oben und unten erweitert und in der Mitte eingeschnürt, werden sich oben leichtere Stoffe sammeln und unterhalb Stoffe mit höherer Dichte. Folglich werden die in der Suspension enthaltenen Fest- und Schwebstoffe, oder die abzutrennende weitere Flüssigkeit, nicht nur vom Filtrat abgetrennt, sondern zugleich fraktioniert. Weiter kann der Leitring 810 auch Ausbuchtungen, Ecken, Kanten oder Ähnliches aufweisen, ähnlich wie der Behälter der Filtervorrichtung 300, durch die die Strömung und deren Richtung verändert wird. Schließlich kann auch auf der Ober- bzw. Unterseite des Leitringes 810 ein Deckel bzw. Boden vorgesehen sein. Dadurch verlässt die Suspension die Filtervorrichtung 800 auf der Unter- bzw. Oberseite der Filtervorrichtung. Durch die Verengung des Auslasses wird die Suspension u. U. beschleunigt, so dass diese verwirbelt wird. Durch einen zylindrischen Leitring 810 wird erreicht, dass die Suspension länger über der Oberfläche der Filtermittel 806 gehalten wird, da der Suspensionsstrom an der Wandung abprallt und zurück auf die Filtermittel geführt wird. Bei der beschriebenen Filtervorrichtung wird somit innerhalb des vergleichsweise großen Volumens eines diese umgebenden Behälters, z. B. eines Containers mit Flüssigkeit, ein kleiner Raum geschaffen, dessen Inhalt durch die Strömung der Suspension leicht in Bewegung gehalten werden kann. Dadurch wird die Abreinigungswirkung weiter verbessert. Der Leitring 810 kann jedoch auch entfallen; auch dann ist die Reinigungsleistung der erfindungsgemäßen, behälterlosen Filtervorrichtung 800 ausreichend, um die Oberfläche der Filtermittel 806 von Rückständen freizuhalten.

Zur weiteren Verstärkung des Filterkuchenabtrags kann eine Gaszuführleitung vorgesehen sein. Diese kann beispielsweise identisch sein mit einer in dem Behälter 2 vorgesehenen Überlaufleitung (nicht dargestellt). Durch diese Gaszuführleitung wird dem Inneren des Behälters 10 Gas, insbesondere Luft, zugeführt. Diese Luftzufuhr kann zeitweilig, insbesondere in Intervallen, erfolgen oder auch kontinuierlich. Durch das Einbringen von Luft, beispielsweise mit einem geringen Überdruck, erhöht sich die Strömungsgeschwindigkeit bei gleichbleibender Pumpleistung und gleichbleibendem Gesamtdruck. Ferner bilden sich Verwirbelungen, wodurch sich der Filterkuchen löst. Die Dauer des Lufteintrags kann sehr kurz sein; ein Einblasen von Luft im Sekundenbereich erwies sich in Versuchen bereits als ausreichend. Die Luftzufuhr kann jedoch auch länger dauern, sogar kontinuierlich erfolgen, was von der zu filternden Suspension letztlich abhängt. Bereits der in einer bis wenigen Sekunden eingebrachte minimale Luftanteil genügt, um abgelagerte Partikel zu verwirbeln und in Suspension zu bringen. Durch die zerplatzenden und sich neu bildenden Luftblasen wird die Wassersäule verwirbelt. Die Gaszuführleitung kann mit bereits vorhandenen Komponenten, beispielsweise der Überlaufleitung, wie oben ausgeführt, identisch sein. Ähnlich könnte sie auch beispielsweise mit einer Suspensionszuleitung identisch sein. Schließlich kann auch eine separate Gaszuführleitung angeordnet werden.

In den Ausführungsbeispielen wurden bereits zahlreiche Behälterformen dargestellt. Der Behälterinnenraum ist jedoch von seiner Grundform her vorzugsweise zylindrisch gestaltet, da dies unerwünschte Partikelablagerungen verhindert. Davon können die Formen abweichen, indem z.B. die in Fig. 6 dargestellten Ausbuchtungen 330, 340 hinzukommen. Ferner sind auch andere Behälterformen als streng zylindrische gedacht, z.B. konische, sich beispielsweise mittig verjüngende, oder horizontal umlaufende, ringförmige Ausbuchtungen aufweisende. Diese umlaufenden, horizontalen Ausbuchtungen sind Vertiefungen in der Behälterwand, in denen sich durch die Zentrifugalkraft zur Behälterwand getragene Partikel sammeln (Zyklon).

Die gesamte Filtervorrichtung kann als Vollkeramikfilter ausgebildet sein. Dies bedeutet, dass im Wesentlichen alle Teile aus Keramik hergestellt sein können. Mit den aus dem Stand der Technik bekannten Filtervorrichtungen war dies nicht möglich, da stets zumindest ein Teil rotierbar war, und folglich nicht oder nur sehr schwer als Keramikteil vorzusehen war. Dies bringt eine Anzahl an Vorteilen mit sich. Die Sterilisierbarkeit einer Vollkeramikfiltervorrichtung ist wesentlich günstiger bzw. überhaupt zu vollziehen als bei den bekannten Vorrichtungen. Es sind nicht nur vergleichsweise hohe Temperaturen einsetzbar, sondern auch aggressivere Verfahren und Desinfektionsmittel, die beispielsweise Metalle angreifen könnten. Wie für das Vollkeramikfiltermittel ausgeführt, ist die Reinigung bzw. Regeneration auch der Vollkeramikfiltervorrichtung mit Dampf, heißen oder reaktiven Gasen oder mittels Pyrolyse möglich.

In sämtlichen in den Figuren dargestellten Ausführungsbeispielen wurde das Filtermittelpaket so dargestellt, dass seine Achse vertikal angeordnet war. Anders ausgedrückt, steht das Filtermittelpaket in der Filtervorrichtung. Es ist jedoch ebenso möglich, ohne dass der vorteilhafte abrasive Abtrag verringert wird, das Filtermittelpaket liegend anzuordnen, so dass seine Achse horizontal oder in von der Horizontalen abweichendem Winkel verläuft. Eine geneigte Anordnung ist beispielsweise für Entlüftungsvorgänge vorteilhaft.

## Patentansprüche

1. Filtervorrichtung (1, 100, 200, 300, 400, 500, 600, 700, 800) aufweisend einen Behälter (2, 202), zumindest je eine Suspensionszuleitung (3, 30, 103, 203, 303, 403, 530, 531, 532, 533, 603, 730, 803, 830) und eine Suspensionsableitung (4, 104, 204, 304, 404, 604), zumindest eine Filtratableitung (5, 105, 205, 305, 505) und zumindest ein ortsfest angeordnetes Filtermittel (6, 60, 106, 206, 306, 406, 506, 606, 806),
**dadurch gekennzeichnet,**
**dass** das Filtermittel eine rotationssymmetrische Rundscheibe mit einem einzigen mittigen Durchbruch ist,
**dass** ein Zentralrohr ausgebildet ist, in dem die Filtratableitung und/oder die Suspensionszuleitung und/oder die Suspensionsableitung crfolgcn, wobei alle Zu- und Ableitungen entweder in dem Zentralrohr oder in der Behälterwand angeordnet sind, und dass die zumindest eine Suspensionszuleitung in der Behälterwand (7, 207, 307, 407, 507) und/oder im Zentralrohr angeordnet ist, wobei die Suspensionszuleitung so angeordnet ist, dass die Suspension dem Behälter tangential zuführbar ist und die so erzeugte rotierende Strömung der Suspension über dem Filtermittel das Zusetzen von dessen Oberfläche verhindert.

2. Filtervorrichtung nach Anspruch 1, **dadurch gekennzeichnet, dass** sich der Querschnitt der Suspensionszuleitung zum Behälterinnenraum (10) hin verjüngt und der Querschnitt der Suspensionsableitung gleich bleibt oder sich erweitert.

3. Filtervorrichtung nach einem der vorangegangenen Ansprüche, **dadurch gekennzeichnet, dass** annähernd gleichmäßig verteilt jedem Filtermittel mehrere Suspensionszuleitungen und Suspensionsableitungen zugeordnet sind, wobei die Anzahl der Suspensionszuleitungen verschieden sein kann von der Anzahl der Suspensionsableitungen.

4. Filtervorrichtung nach einem der vorangegangenen Ansprüche, **dadurch gekennzeichnet, dass** die Behälterwand (307) und/oder das Zentrahlrohr (341, 802) des Behälters Ausbuchtungen (330, 340) aufweist, so dass die strömende Suspension daran umlenkbar ist, wobei die Ausbuchtungen insbesondere gerundet sind.

5. Filtervorrichtung nach einem der vorangegangenen Ansprüche, **dadurch gekennzeichnet, dass** zwischen zwei Filtermitteln zumindest ein Rotationskörper, der insbesondere die Form einer Scheibe, Ring, Kugel, Pyramide oder eines Quaders aufweist, vorgesehen ist, der durch die Strömung der Suspension bewegbar ist.

6. Filtervorrichtung nach einem der vorangegangenen Ansprüche, **dadurch gekennzeichnet, dass** zwischen zwei Filtermitteln (606) ein Rührorgan (650) vorgesehen ist, das durch die Strömung der Suspension antreibbar ist, wobei das Rührorgan insbesondere eine Flügelform, Leistenform oder Bürstenform aufweist.

7. Filtervorrichtung nach einem der vorangegangenen Ansprüche, **dadurch gekennzeichnet, dass** die Filtervorrichtung (100, 300, 500) aus einzelnen Filtermodulen (101, 110, 220) besteht, wobei jedes Filtermodul (101, 110, 220) zumindest jeweils eine Suspensionszuleitung (103, 303, 530, 531, 532, 533), eine Suspensionsableitung (204, 304), ein Filtermittel (106, 306, 506) und eine Filtratableitung (105, 305, 505) aufweist, wobei die Suspensionszuleitungen und/oder die Suspensionsableitungen hintereinander angeordneter Module insbesondere über zumindest eine Suspensionssammelzuleitung (123, 323, 523) und/oder zumindest eine Suspensionssammelableitung (124, 324) verbindbar sind.

8. Filtervorrichtung nach einem der vorangegangenen Ansprüche, **dadurch gekennzeichnet, dass** zwei Behälterkompartimente (410, 411) vorgesehen sind, die durch eine Perforationen (421) aufweisende Trennwand (420) voneinander getrennt sind, wobei durch die in einem Behälterkompartiment (410) einströmende Suspension in jedem Behälterkompartiment (410, 411) ein Strömungskreislauf erzeugbar ist.

9. Filtervorrichtung nach einem der vorangegangenen Ansprüche, **dadurch gekennzeichnet, dass** um das Zentralrohr zwischen den Filtermitteln (6, 806) zumindest jeweils ein Einströmer (820) angeordnet ist, wobei dieser insbesondere ein ringförmiges Lager (821) und Fortsätze (822) aufweist mit einer Suspensionszuleitung (830) und entsprechenden Öffnungen (833, 835), so dass die Suspension über die Oberfläche der Filtermittel fübrbar ist.

10. Filtrationsverfahren, das in einer Filtervorrichtung (1, 100, 200, 100, 400, 500, 600, 700, 800) durchgeführt wird, wobei diese einen Behälter (2, 202), umfasst, welcher zumindest je eine Suspensionszuleitung (3, 30, 103, 203, 303, 403, 530, 531, 532, 533, 603, 730, 803, 830) und eine Suspensionsableitung (4, 104, 204, 304, 404, 604), zumindest eine Filtratableitung (5, 105, 205, 305, 505) und zumindest ein ortsfest angeordnetes Filtermittel (6, 60, 106, 206, 306, 406, 506, 606, 806) aufweist, wobei das Filtermittel eine rotationssymmetrische Rundscheibe mit einem einzigen mittigen Durchbruch ist, wobei ein Zentralrohr ausgebildet ist, in dem die Filtratableitung und/oder die Suspensionszuleitung und/oder die Suspensionsableitung erfolgen, wobei alle Zu- und Ableitungen entweder in dem Zentralrohr oder in der Behälterwand angeordnet sind, und wobei die zumindest eine Suspensionszuleitung in der Behälterwand (7, 207, 307, 407, 507) und/oder im Behälterinnenraum (10) angeordnet ist, wobei die Suspensionszuleitung so angeordnet ist, dass die Suspension dem Behälter tangential zugeführt wird und die so erzeugte rotierende Strömung der Suspension über dem Filtermittel das Zusetzen von dessen Oberfläche verhindert,
**dadurch gekennzeichnet, dass**
die Suspension über die Suspensionszuleitung tangential unter Druck eingeströmt wird, so dass eine rotierende Strömung über dem Filtermittel erzeugt wird, und die Suspension aus der zumindest einen Suspensionszuleitung auf das Filtermittel geströmt wird, durch welche Maßnahmen das Zusetzen der Oberfläche des Filtermittels verhindert wird.

## Claims

1. Filter device (1, 100, 200, 300, 400, 500, 600, 700, 800) comprising a vessel (2, 202), at least one respective suspension feed line (3, 30, 103, 203, 303, 403, 530, 531, 532, 533, 603, 730, 803, 830) and one respective suspension removal line (4, 104, 204, 304, 404, 604), at least one filtrate removal line (5, 105, 205, 305, 505) and at least one filter means (6, 60, 106, 206, 306, 406, 506, 606, 806) disposed in a stationary manner,
**characterised in**
**that** the filter means is a rotationally symmetrical circular disc with a single central aperture,
**that** a central tube is formed, in which the filtrate removal and/or the suspension feed and/or the suspension removal take(s) place, wherein all the feed and removal lines are disposed either in the central tube or in the vessel wall, and that the at least one suspension feed line is disposed in the vessel wall (7, 207, 307, 407, 507) and/or in the central tube, wherein the suspension feed line is disposed such that the suspension is supplied to the vessel tangentially and the rotating flow of the suspension which is thus produced over the filter means prevents the surface thereof from clogging.

2. Filter device according to Claim 1, **characterised in that** the cross section of the suspension feed line tapers towards the vessel interior (10) and the cross section of the suspension removal line remains constant or widens.

3. Filter device according to either of the preceding Claims, **characterised in that** a plurality of suspension feed lines and suspension removal lines are associated with each filter means in an approximately uniformly distributed manner, wherein the number of suspension feed lines may differ from the number of suspension removal lines.

4. Filter device according to any one of the preceding Claims, **characterised in that** the vessel wall (307) and/or the central tube (341, 802) of the vessel comprises curves (330, 340), so that the flowing suspension can be deflected at these, wherein the curves are in particular rounded.

5. Filter device according to any one of the preceding Claims, **characterised in that** at least one rotational body, which is in particular in the form of a disc, ring, ball, pyramid or cuboid, is provided between two filter means and can be moved by the flow of the suspension.

6. Filter device according to any one of the preceding Claims, **characterised in that** an agitator member (650), which can be driven by the flow of the suspension, is provided between two filter means (606), wherein the agitator member is in particular in the form of a blade, strip or brush.

7. Filter device according to any one of the preceding Claims, **characterised in that** the filter device (100, 300, 500) consists of individual filter modules (101, 110, 220), wherein each filter module (101, 110, 220) comprises at least one respective suspension feed line (103, 303, 530, 531, 532, 533), one respective suspension removal line (104, 304), one respective filter means (106, 306, 506) and one respective filtrate removal line (105, 305, 505), wherein the suspension feed lines and/or the suspension removal lines of modules disposed in tandem can be connected in particular via at least one suspension collection feed line (123, 323, 523) and/or at least one suspension collection removal line (124, 324).

8. Filter device according to any one of the preceding Claims, **characterised in that** two vessel compartments (410, 411) are provided, which compartments are separated from one another by a partition (420) comprising perforations (421), wherein a flow circulation can be produced in each vessel compartment (410, 411) by the suspension flowing into a vessel compartment (410).

9. Filter device according to any one of the preceding Claims, **characterised in that** at least one respective inflow part (820) is disposed around the central tube between the filter means (6, 806), wherein this comprises in particular an annular bearing (821) and prolongations (822) with a suspension feed line (830) and corresponding openings (833, 835), so that the suspension can be routed over the surface of the filter means.

10. Filtration method which is carried out in a filter device (1, 100, 200, 300, 400, 500, 600, 700, 800), wherein this comprises a vessel (2, 202) which comprises at least one respective suspension feed line (3, 30, 103, 203, 303, 403, 530, 531, 532, 533, 603, 730, 803, 830) and one respective suspension removal line (4, 104, 204, 304, 404, 604), at least one filtrate removal line (5, 105, 205, 305, 505) and at least one filter means (6, 60, 106, 206, 306, 406, 506, 606, 806) disposed in a stationary manner, wherein the filter means is a rotationally symmetrical circular disc with a single central aperture, wherein a central tube is formed, in which the filtrate removal and/or the suspension feed and/or the suspension removal take(s) place, wherein all the feed and removal lines are disposed either in the central tube or in the vessel wall, and wherein the at least one suspension feed line is disposed in the vessel wall (7, 207, 307, 407, 507) and/or in the vessel interior (10), wherein the suspension feed line is disposed such that the suspension is supplied to the vessel tangentially and the rotating flow of the suspension which is thus produced over the filter means prevents the surface thereof from clogging,
**characterised in that**
the suspension flows in tangentially under pressure via the suspension feed line, so that a rotating flow is produced over the filter means, and the suspension flows out of the at least one suspension feed line up to the filter means, which measures prevent the surface of the filter means from clogging.

## Revendications

1. Dispositif de filtration (1, 100, 200, 300, 400, 500, 600, 700, 800) présentant un réservoir (2, 202), au moins respectivement une conduite d'amenée de suspension (3, 30, 103, 203, 303, 403, 530, 531, 532, 533, 603, 730, 803, 830) et une conduite d'évacuation de suspension (4, 104, 204, 304, 404, 604), au moins une conduite d'évacuation de filtrat (5, 105, 205, 305, 505) et au moins un moyen de filtration (6, 60, 106, 206, 306, 406, 506, 606, 806) disposé fixement,
**caractérisé en ce que**
le moyen de filtration est un disque rond symétrique en rotation pourvu d'un seul passage central ;
un tube central est formé dans lequel la conduite d'évacuation de filtrat et/ou la conduite d'amenée de suspension et/ou la conduite d'évacuation de suspension débouchent, toutes les conduites d'amenée et d'évacuation étant soit disposées dans le tube central soit dans la paroi de réservoir ; et
l'au moins une conduite d'amenée de suspension est disposée dans la paroi de réservoir (7, 207, 307, 407, 507) et/ou dans le tube central, la conduite d'amenée de suspension étant disposée de telle sorte que la suspension peut être amenée de façon tangentielle vers le réservoir et que le flux tournant de suspension ainsi produit au-dessus du moyen de filtration empêche l'encrassement de sa surface.

2. Dispositif de filtration selon la revendication 1, **caractérisé en ce que** la coupe transversale de la conduite d'amenée de suspension se rétrécit en direction de l'intérieur du réservoir (10) et que la coupe transversale de la conduite d'évacuation de suspension reste identique ou s'élargit.

3. Dispositif de filtration selon l'une quelconque des revendications précédentes, **caractérisé en ce que** plusieurs conduites d'amenée de suspension et plusieurs conduites d'évacuation de suspension sont associées à chaque moyen de filtration et réparties approximativement régulièrement, le nombre de conduites d'amenée de suspension pouvant être différent du nombre de conduites d'évacuation de suspension.

4. Dispositif de filtration selon l'une quelconque des revendications précédentes, **caractérisé en ce que** la paroi de réservoir (307) et/ou le tube central (341, 802) du réservoir présentent des renflements (330, 340), de sorte que la suspension s'écoulant peut être déviée, les renflements étant notamment arrondis.

5. Dispositif de filtration selon l'une quelconque des revendications précédentes, **caractérisé en ce qu'**au moins un corps en rotation, prenant notamment la forme d'un disque, d'un anneau, d'une sphère, d'une pyramide ou d'un parallélépipède, est prévu entre les deux moyens de filtration, ledit corps pouvant être déplacé par l'écoulement de la suspension.

6. Dispositif de filtration selon l'une quelconque des revendications précédentes, **caractérisé en ce qu'**un agitateur (650) est prévu entre deux moyens de filtration (606), ledit agitateur pouvant être entraîné par l'écoulement de la suspension et prenant notamment une forme de pale, de barre, de balai.

7. Dispositif de filtration selon l'une quelconque des revendications précédentes, **caractérisé en ce que** le dispositif de filtration (100, 300, 500) se compose de modules de filtration (101, 110, 220) individuels, chaque module de filtration (101, 110, 220) présentant au moins respectivement une conduite d'amenée de suspension (103, 303, 530, 531, 532, 533), une conduite d'évacuation de suspension (104, 304), un moyen de filtration (106, 306, 506) et une conduite d'évacuation de filtrat (105, 305, 505), les conduites d'amenée de suspension et/ou les conduites d'évacuation de suspension des modules disposés les uns à la suite des autres pouvant notamment être reliées par l'intermédiaire d'au moins une conduite d'amenée de suspension collectrice (123, 323, 523) et/ou d'au moins une conduite d'évacuation de suspension collectrice (124, 324).

8. Dispositif de filtration selon l'une quelconque des revendications précédentes, **caractérisé en ce que** deux compartiments de réservoir (410, 411) sont prévus, lesdits compartiments étant séparés l'un de l'autre par une paroi de séparation (420) présentant des perforations (421), un circuit d'écoulement étant engendré dans chaque compartiment de réservoir (410, 411) par la suspension s'écoulant dans un compartiment de réservoir (410).

9. Dispositif de filtration selon l'une quelconque des revendications précédentes, **caractérisé en ce qu'**au moins respectivement un dispositif d'admission (820) est disposé autour du tube central entre les moyens de filtration (6, 806), ledit dispositif d'admission présentant notamment un palier (821) de forme annulaire et des prolongements (822) avec une conduite d'amenée de suspension (830) et les ouvertures (833, 835) correspondantes, de sorte que la suspension peut être amenée au-dessus de la surface du moyen de filtration.

10. Procédé de filtration mis en oeuvre dans un dispositif de filtration (1, 100, 200, 300, 400, 500, 600, 700, 800), ce dernier comprenant un réservoir (2, 202) présentant au moins respectivement une conduite d'amenée de suspension (3, 30, 103, 203, 303, 403, 530, 531, 532, 533, 603, 730, 803, 830) et une conduite d'évacuation de suspension (4, 104, 204, 304, 404, 604), au moins une conduite d'évacuation de filtrat (5, 105, 205, 305, 505) et au moins un moyen de filtration (6, 60, 106, 206, 306, 406, 506, 606, 806) disposé fixement, le moyen de filtration étant un disque rond symétrique en rotation avec un seul passage central, un tube central étant formé dans lequel la conduite d'évacuation de filtrat et/ou la conduite d'amenée de suspension et/ou la conduite d'évacuation de suspension débouchent, toutes les conduites d'amenée et d'évacuation étant soit disposées dans le tube central soit dans la paroi de réservoir, et l'au moins une conduite d'amenée de suspension étant disposée dans la paroi de réservoir (7, 207, 307, 407, 507) et/ou dans l'intérieur du réservoir (10), la conduite d'amenée de suspension étant disposée de telle sorte que la suspension peut être amenée de façon tangentielle vers le réservoir et que le flux tournant de suspension ainsi produit au-dessus du moyen de filtration empêche l'encrassement de sa surface ;
**caractérisé en ce que**
la suspension peut être amenée sous pression de façon tangentielle par l'intermédiaire de la conduite d'amenée de suspension, de sorte qu'un écoulement tournant est produit au-dessus du moyen de filtration et que la suspension est amenée depuis l'au moins une conduite d'amenée de suspension au-dessus du moyen de filtration, ces mesures empêchant l'encrassement de la surface du moyen de filtration.
